# EUROPEAN PATENT SPECIFICATION

(11) **EP 4 084 566 B1**
(45) Date of publication and mention of the grant of the patent: **09.08.2023**
(21) Application number: 21218069.9
(22) Date of filing: 29.12.2021
(51) Int. Cl.: H04W 74/08, H04W 24/08, H04W 76/10

(54) **DATA TRANSMISSION METHOD FOR NB-IOT END, AND NB-IOT CHIP, DEVICE, AND COMMUNICATION SYSTEM**
DATENÜBERTRAGUNGSVERFAHREN FÜR NB-IOT-ENDE UND NB-IOT-CHIP, VORRICHTUNG UND KOMMUNIKATIONSSYSTEM
PROCÉDÉ DE TRANSMISSION DE DONNÉES POUR EXTRÉMITÉ NB-IOT ET PUCE NB-IOT, DISPOSITIF ET SYSTÈME DE COMMUNICATION

(30) Priority: 26.04.2021 CN 202110455170
(43) Date of publication of application: 02.11.2022
(73) Proprietor: Shenzhen Goodix Technology Co., Ltd., Shenzhen, Guangdong 518045 (CN)
(72) Inventor: WANG, Jihui, Shenzhen, Guangdong 518045 (CN); PENG, Bo, Shenzhen, Guangdong 518045 (CN); LIAO, Ruoyun, Shenzhen, Guangdong 518045 (CN)
(74) Representative: Rösler Rasch van der Heide & Partner

(56) References cited:
- WO-A1-2016/190711
- WO-A1-2020/187386
- CN-A- 109 803 302
- US-A1- 2020 329 506

## Description

### TECHNICAL FIELD

The present disclosure relates to the communication field, and in particular, to a data transmission method for a Narrowband Internet of Things (NB-IoT) end, an NB-IoT chip, an NB-IoT device, an NB-IoT communication system, and a computer-readable storage medium.

### BACKGROUND

Originated from the media field, the Internet of Things (IoT) technology is a honeycomb-based NB-IoT technology. It supports a cellular data connection, in a wide area network (WAN), of a device with low power consumption, and is mainly used in situations with ultra-low power consumption, weak coverage and access of a large quantity of terminals. The 2G logout message released by the ministry of communications, and the implementation, with 5G evolution, of the NB-IoT protocol in the 3rd Generation Partnership Project (3GPP) summit have laid a solid foundation for the sustainable development of the NB-IoT. The NB-IoT has a network coverage gain 20 dB greater than an existing network coverage gain, which is equivalent to increasing an area coverage capability by 100 times. This gain mainly depends on a large quantity of repetitions of transmission to improve coverage performance. Whether a terminal can quickly and successfully obtain correct data through demodulation mainly depends on whether the terminal has a strategy of fast access to a base station. At present, according to a strategy in the 3GPP protocol, an enhance coverage level (ECL) is determined only based on measured narrowband reference signal receiving power (NRSRP). If the measured NRSRP is greater than an NRSRP threshold delivered by the base station, the terminal sends a random access preamble to the base station based on a small ECL. If the measured NRSRP is smaller than the NRSRP threshold delivered by the base station, the terminal sends the random access preamble to the base station based on a greater ECL.

Ideally, the measured NRSRP can roughly reflect a distance between the terminal and the base station. A shorter distance between the terminal and the base station leads to greater NRSRP measured by the terminal and better communication quality. However, because spectrum resources of operators are very precious, same-frequency networking is adopted in most situations, inevitably resulting in interference. In some areas, the measured NRSRP may be great, but a measured signal to interference plus noise ratio (SINR) is low. As a result, the terminal sends the random access preamble to the base station in a case of a small ECL configuration, and the base station cannot successfully demodulate the random access preamble or return a random access response (RAR) to the terminal. Even if the terminal receives the RAR, the terminal cannot successfully obtain the RAR through demodulation. As a result, the terminal accesses the base station with more time and larger power consumption. Prior-art patent application WO2016/190711 A1 discloses a method including determining the Coverage Extension, CE, level from a Downlink measurement. The method also includes attempting a RRC connection establishment using one of a CE specific Random Access Channel, RACH, preamble and CE specific Physical Random Access Channel, PRACH, resources for a Bandwidth reduced Low complexity User Equipment.

### SUMMARY

To resolve the problem that data transmission is time-consuming due to an improper ECL configuration of an NB-IoT end, the present disclosure provides a data transmission method for an NB-IoT end, an NB-IoT chip, device, and communication system, and a computer-readable storage medium.

According to a first aspect, an embodiment of the present disclosure provides a data transmission method for a Narrowband Internet of Things (NB-IoT) end, including: when narrowband reference signal receiving power (NRSRP) measured by the NB-IoT end is greater than or equal to a first NRSRP threshold, and a signal to interference plus noise ratio (SINR) measured by the NB-IoT end is smaller than or equal to a first SINR threshold, sending, by the NB-IoT end, a random access preamble to a base station through a narrowband physical random access channel NPRACH based on a configuration with an enhance coverage level (ECL) being 1 or 2, to set up a connection between the NB-IoT end and the base station.

According to the first aspect, in a possible implementation, the method further includes: when the NRSRP measured by the NB-IoT end is greater than or equal to the first NRSRP threshold, and the SINR measured by the NB-IoT end is greater than the first SINR threshold, sending, by the NB-IoT end, the random access preamble to the base station through the NPRACH based on a configuration with the ECL being 0.

According to the first aspect, in a possible implementation, the method further includes: when the NRSRP measured by the NB-IoT end is smaller than the first NRSRP threshold, sending, by the NB-IoT end, the random access preamble to the base station through the NPRACH based on the configuration with the ECL being 1 or 2.

According to the first aspect, in a possible implementation, a second SINR threshold is smaller than the first SINR threshold; and the data transmission method for an NB-IoT end further includes: when the NRSRP measured by the NB-IoT end is smaller than the first NRSRP threshold, and the SINR measured by the NB-IoT end is smaller than or equal to the second SINR threshold, sending, by the NB-IoT end, the random access preamble to the base station through the NPRACH based on the configuration with the ECL being 2; and/or when the NRSRP measured by the NB-IoT end is smaller than the first NRSRP threshold, and the SINR measured by the NB-IoT end is greater than the second SINR threshold, sending, by the NB-IoT end, the random access preamble to the base station through the NPRACH based on the configuration with the ECL being 1.

According to the first aspect, in a possible implementation, the first NRSRP threshold is greater than a second NRSRP threshold, a second SINR threshold is smaller than the first SINR threshold; and the data transmission method for an NB-IoT end further includes: when the NRSRP measured by the NB-IoT end is smaller than the second NRSRP threshold, sending, by the NB-IoT end, the random access preamble to the base station through the NPRACH based on the configuration with the ECL being 2; when the NRSRP measured by the NB-IoT end is smaller than the first NRSRP threshold and greater than or equal to the second NRSRP threshold, and the SINR measured by the NB-IoT end is smaller than or equal to the second SINR threshold, sending, by the NB-IoT end, the random access preamble to the base station through the NPRACH based on the configuration with the ECL being 2; and/or when the NRSRP measured by the NB-IoT end is smaller than the first NRSRP threshold and greater than or equal to the second NRSRP threshold, and the SINR measured by the NB-IoT end is greater than the second SINR threshold, sending, by the NB-IoT end, the random access preamble to the base station through the NPRACH based on the configuration with the ECL being 1.

According to the first aspect, in a possible implementation, the method further includes: receiving, by the NB-IoT end, the second NRSRP threshold sent by the base station, such that the NB-IoT end compares the measured SINR with the second SINR threshold and compares the measured NRSRP with the first NRSRP threshold and the second NRSRP threshold, where the second NRSRP threshold is -120 dBm.

According to the first aspect, in a possible implementation, a second SINR threshold is smaller than the first SINR threshold; and the data transmission method for an NB-IoT end further includes: when the NRSRP measured by the NB-IoT end is greater than or equal to the first NRSRP threshold, and the SINR measured by the NB-IoT end is smaller than or equal to the first SINR threshold and greater than the second SINR threshold, sending, by the NB-IoT end, the random access preamble to the base station through the NPRACH based on the configuration with the ECL being 1; and/or when the NRSRP measured by the NB-IoT end is greater than or equal to the first NRSRP threshold, and the SINR measured by the NB-IoT end is smaller than or equal to the second SINR threshold, sending, by the NB-IoT end, the random access preamble to the base station through the NPRACH based on the configuration with the ECL being 2.

According to the first aspect, in a possible implementation, when the NRSRP measured by the NB-IoT end is greater than or equal to the first NRSRP threshold, and the SINR measured by the NB-IoT end is smaller than or equal to the first SINR threshold and greater than the second SINR threshold, sending, the NB-IoT end, the random access preamble to the base station through the NPRACH based on the configuration with the ECL being 1; and/or when the NRSRP measured by the NB-IoT end is greater than or equal to the first NRSRP threshold, and the SINR measured by the NB-IoT end is smaller than the second SINR threshold, sending, by the NB-IoT end, the random access preamble to the base station through the NPRACH based on the configuration with the ECL being 2.

According to the first aspect, in a possible implementation, the method further includes: derterming, based on a scheduling parameter of the base station, the first SINR threshold and/or the second SINR threshold.

According to the first aspect, in a possible implementation, the scheduling parameter of the base station includes a data demodulation success rate, and when the data demodulation success rate of the NB-IoT end under a configuration with the ECL being 0 or 1 is smaller than a preset success rate, the second SINR threshold increases, and/or the first SINR threshold increases.

According to the first aspect, in a possible implementation, when a demodulation success rate of the NB-IoT end under a configuration with the ECL being 1 is greater than or equal to 70%, the measured SINR is the second SINR threshold; and the second SINR threshold is -4 dB.

According to the first aspect, in a possible implementation, when the demodulation success rate of the NB-IoT end under a configuration with the ECL being 0 is greater than or equal to 70%, the measured SINR is the first SINR threshold; and the first SINR threshold is 5 dB.

According to the first aspect, in a possible implementation, the method further includes: receiving, by the NB-IoT end, a system message broadcast by the base station, to measure the NRSRP and the SINR.

According to the first aspect, in a possible implementation, the method further includes: receiving, by the NB-IoT end, the first NRSRP threshold sent by the base station, such that the NB-IoT end compares the measured SINR with the first SINR threshold and compares the measured NRSRP and the first NRSRP threshold, where the first NRSRP threshold is -110 dBm.

According to the first aspect, in a possible implementation, the method further includes: sending, by the NB-IoT end, the random access preamble to the base station through the NPRACH, such that the base station performs scheduling based on radio resource configuration information corresponding to the ECL to send a random access response (RAR) to the NB-IoT end, where the radio resource configuration information includes at least one of a quantity of repetitions of the random access preamble, a maximum quantity of attempts made by the NB-IoT end to access the base station, a time domain resource of the NPRACH, and a frequency domain resource of the NPRACH.

According to the first aspect, in a possible implementation, after the sending, by the NB-IoT end, the random access preamble to the base station through the NPRACH, the data transmission method for an NB-IoT end further includes: receiving, by the NB-IoT end, a random access response (RAR) sent by the base station; demodulating, by the NB-IoT end, the RAR; sending, by the NB-IoT end, a radio resource control (RRC) connection request to the base station, such that the base station returns an RRC connect setup message to the NB-IoT end after receiving the RRC connection request; receiving, by the NB-IoT end, the RRC connect setup message sent by the base station; and sending, by the NB-IoT end, an RRC connect setup complete message to the base station.

According to the first aspect, in a possible implementation, said sending, by the NB-IoT end, the random access preamble to the base station through the NPRACH includes: sending, by the NB-IoT end, the random access preamble to the base station through the NPRACH based on the ECL, where a greater ECL leads to a larger quantity of repetitions of the random access preamble corresponding to the ECL.

According to the first aspect, in a possible implementation, when setting a connection between the NB-IoT end and the base station through the NPRACH based on the configuration with the ECL being 0, the quantity of repetitions of the random access preamble is 2; or when setting a connection between the NB-IoT end and the base station through the NPRACH based on the configuration with the ECL being 1, the quantity of repetitions of the random access preamble is 8; or when setting a connection between the NB-IoT end and the base station through the NPRACH based on the configuration with the ECL being 2, the quantity of repetitions of the random access preamble is 16.

According to the first aspect, in a possible implementation, the method further includes: when the NRSRP measured by the NB-IoT end is greater than or equal to the first NRSRP threshold, sending, by the NB-IoT end, the random access preamble to the base station by using a minimum value in Pmax and (x-t_NRSRP) as transmit power; and/or when the NRSRP measured by the NB-IoT end is smaller than the first NRSRP threshold, sending, by the NB-IoT end, the random access preamble to the base station by using Pmax as transmit power, where Pmax represents maximum transmit power configured by the base station for the NB-IoT end, x=TargetPower+DELTA _PREAMBLE +(Preamble_TC-1)^{∗}PR_Step+NRS_power_r13-Gain, where TargetPower represents target power configured by the base station for the NB-IoT end, DELTA_PREAMBLE represents a power offset of the random access preamble, Preamble_TC represents a quantity of access times of the NB-IoT end, PR_Step represents a power increment step, NRS_power_r13 represents reference signal power of the base station, Gain represents a gain corresponding to a quantity of repetitions of the random access preamble, and t NRSRP represents the NRSRP measured by the NB-IoT end; and Pmax is 23 dBm.

According to a second aspect, an embodiment of the present disclosure provides an NB-IoT chip, including a memory storing program instructions; and a processor coupled to the memory and configured to call the program instructions stored in the memory, such that an UE executes the data transmission method for an NB-IoT end in the first aspect.

According to a third aspect, an embodiment of the present disclosure provides an NB-IoT device, including an antenna and the NB-IoT chip described in the second aspect, where the antenna is connected to the NB-IoT chip to realize data transmission between the NB-IoT device and a base station.

According to a fourth aspect, an embodiment of the present disclosure provides an NB-IoT communication system, including the NB-IoT device described in the third aspect and the base station, where the NB-IoT device is wirelessly connected to the base station to perform data transmission.

According to a fifth aspect, an embodiment of the present disclosure provides a computer-readable storage medium storing a computer program, where the computer program is executed by a processor to implement any data transmission method for an NB-IoT end in the first aspect.

Compared with the related art, the embodiments of the present disclosure have the following beneficial effects: The embodiments of the present disclosure provide a data transmission method for an NB-IoT end, an NB-IoT chip, device, and communication system, and a computer-readable storage medium. When NRSRP measured by an NB-IoT end is greater than or equal to a first NRSRP threshold, and an SINR measured by the NB-IoT end is smaller than or equal to a first SINR threshold, the NB-IoT end sends a random access preamble to a base station based on a configuration with an ECL being 1 or 2, to set up a connection to the base station. An ECL configuration is determined based on the measured NRSRP and SINR, thereby avoiding long data transmission time due to an improper ECL configuration, and improving user experience.

### BRIEF DESCRIPTION OF THE DRAWINGS

To describe the technical solutions in the embodiments of the present disclosure or in the related art more clearly, the following briefly describes the accompanying drawings required for describing the embodiments or the related art. Apparently, the accompanying drawings in the following description show some embodiments of the present disclosure, and a person of ordinary skill in the art may still derive other drawings from these accompanying drawings without creative efforts.
FIG. 1 is a schematic diagram of a configuration of an existing network according to an embodiment of the present disclosure;
FIG. 2 is a schematic diagram of a coverage level according to an embodiment of the present disclosure;
FIG. 3 is a schematic diagram illustrating interference between cells according to an embodiment of the present disclosure;
FIG. 4 is a flowchart of a data transmission method for an NB-IoT end according to an embodiment of the present disclosure;
FIG. 5 is a flowchart of another data transmission method for an NB-IoT end according to an embodiment of the present disclosure;
FIG. 6 is a flowchart of still another data transmission method for an NB-IoT end according to an embodiment of the present disclosure;
FIG. 7 is a flowchart of still another data transmission method for an NB-IoT end according to an embodiment of the present disclosure;
FIG. 8 is a flowchart of still another data transmission method for an NB-IoT end according to an embodiment of the present disclosure;
FIG. 9 is a flowchart of still another data transmission method for an NB-IoT end according to an embodiment of the present disclosure;
FIG. 10 is a schematic diagram of another existing network configuration according to an embodiment of the present disclosure;
FIG. 11 is a flowchart of a data transmission method for an NB-IoT end by taking specific data as an example according to an embodiment of the present disclosure;
FIG. 12 is a flowchart of still another data transmission method for an NB-IoT end according to an embodiment of the present disclosure;
FIG. 13 is a flowchart of a method for determining transmit power of an NPRACH according to an embodiment of the present disclosure;
FIG. 14 is a flowchart of a method for accessing a base station by an NB-IoT end according to an embodiment of the present disclosure;
FIG. 15 is a schematic diagram of a structure of an NB-IoT chip according to an embodiment of the present disclosure;
FIG. 16 is a schematic diagram of a structure of an NB-IoT device according to an embodiment of the present disclosure; and
FIG. 17 is a schematic diagram of a structure of an NB-IoT communication system according to an embodiment of the present disclosure.

### DETAILED DESCRIPTION

In order to make the objectives, technical solutions and advantages of the present disclosure clearer, some embodiments of the present disclosure are described in detail below by using examples with reference to the accompanying drawings. However, those of ordinary skill in the art should understand that many technical details are proposed in the examples to make the present disclosure better illustrated. However, even without these technical details and various changes and modifications made based on the following embodiments, the technical solutions claimed in the present disclosure may still be realized.

Before the technical solutions are described, a current NB-IoT system is briefly described first. There are two types of physical channels of the NB-IoT uplink channels: narrowband physical uplink shared channel (NPUSCH) and narrowband physical random shared channel (NPRACH). The NPRACH is an access channel when a terminal starts to initiate a call. For different ECLs, different quantities of information repetitions are set for the NPRACH to achieve coverage enhancement. A greater ECL leads to a larger quantity of information repetitions that is correspondingly set for the NPRACH. Further, a base station configures, by using a narrowband system information block 2 (SIB2-NB), a maximum quantity of access attempts. The SIB2-NB can also be referred to as SIB2 for short. Based on the above rules, in a situation in which the ECL is i (i is an integer, and 0≤i≤1), the terminal requests to access the base station, and an access attempt process is as follows: in the NPRACH, the terminal attempts to access the base station every time with a quantity of information repetitions corresponding to the ECL being i; when a quantity of times that the terminal attempts to access the base station is equal to the maximum quantity of access attempts that is set by the base station, if the terminal still has not successfully accessed the base station, the terminal upgrades the current ECL to a greater ECL, and attempts to access the base station according to the same access attempt process described above. After ECL upgrade, the quantity of information repetitions increases correspondingly, which can effectively increase a probability that the terminal successfully accesses the base station.

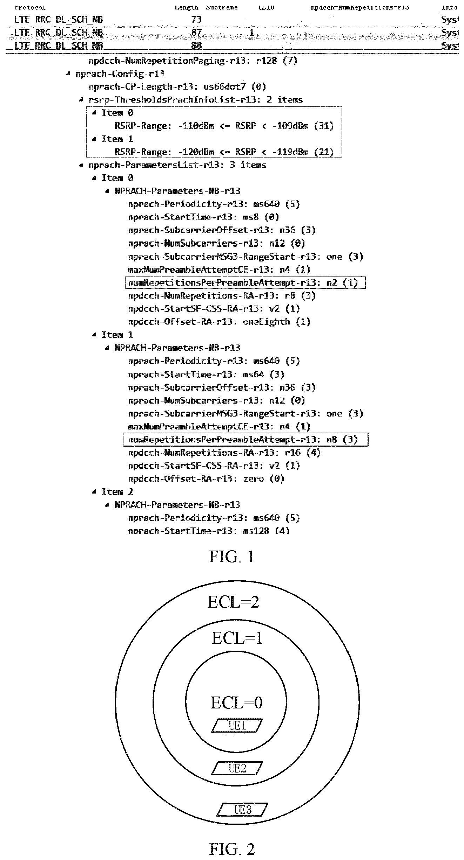

FIG. 1 shows a configuration of an existing network. As shown in FIG. 1, the base station delivers a SIB2 to user equipment (UE) of an IoT user. The SIB2 includes a cell configuration parameter rrc.rsrp_ThresholdsPrachInfoList_r13. The cell configuration parameter is used to indicate a threshold of each parameter for determining an ECL of a current cell. Please refer to Item 0 shown in FIG. 1, when NRSRP measured by the UE is [-110 dBm, - 109 dBm], the UE attempts to access the base station based on a configuration with the ECL being 0. Please refer to Item 1 shown in FIG. 1, when the NRSRP measured by the UE is [-120 dBm, -119 dBm], the UE attempts to access the base station based on a configuration with the ECL being 1. A quantity of repetitions of message sending varies with an ECL. In this embodiment, for the configuration with the ECL being 0, numRepetitionsPerPreambleAttempt-r13:n2(1) indicates that the quantity of repetitions is 2; and for the configuration with the ECL being 1, numRepetitionsPerPreambleAttempt-r13:n8(3) indicates that the quantity of repetitions is 8. For the configuration with the ECL being 2, the quantity of repetitions may be set to 16. A larger quantity of times of repeatedly sending an uplink message by the UE leads to a higher success rate of demodulating, by the UE, a message returned by the base station. In this embodiment of the present disclosure, specific data shown in FIG. 1 is merely illustrative.

In this embodiment, the NRSRP is a key parameter that can represent strength of a wireless signal and one of physical layer measurement demands in an NB-IoT network, and is an average value of signal power received on all resource elements (REs) carrying reference signals in a certain symbol.

FIG. 2 is a schematic diagram of the ECL. As shown in FIG. 2, if same power and a same modulation and coding scheme (MCS) are adopted for all UEs in a coverage area, on a premise of ensuring reliable transmission, power consumption increases and a capacity decreases. To take into account a coverage depth and capacity performance, NB-IoT cells are classified into different ECLs. The UE selects a corresponding configuration of an ECL based on signal strength to perform service transmission. Communication between a UE belonging to a small ECL and the base station has good quality, and a transmission rate thereof is guaranteed first. A signal between a UE belonging to a great ECL and the base station is weak, and the UE belonging to the great ECL can appropriately reduce a data transmission rate and give priority to a transmission success rate. A greater ECL leads to a larger quantity of repetitions when the UE sends uplink data, such that data returned by the base station is easier to be successfully demodulated by the UE, but more radio resources are occupied and a lower rate is caused. Therefore, selecting an appropriate ECL is very important to performance of the UE. For example, in an area with a strong signal between the base station and the UE, the configuration with the ECL being 0 can be used to efficiently complete service transmission.

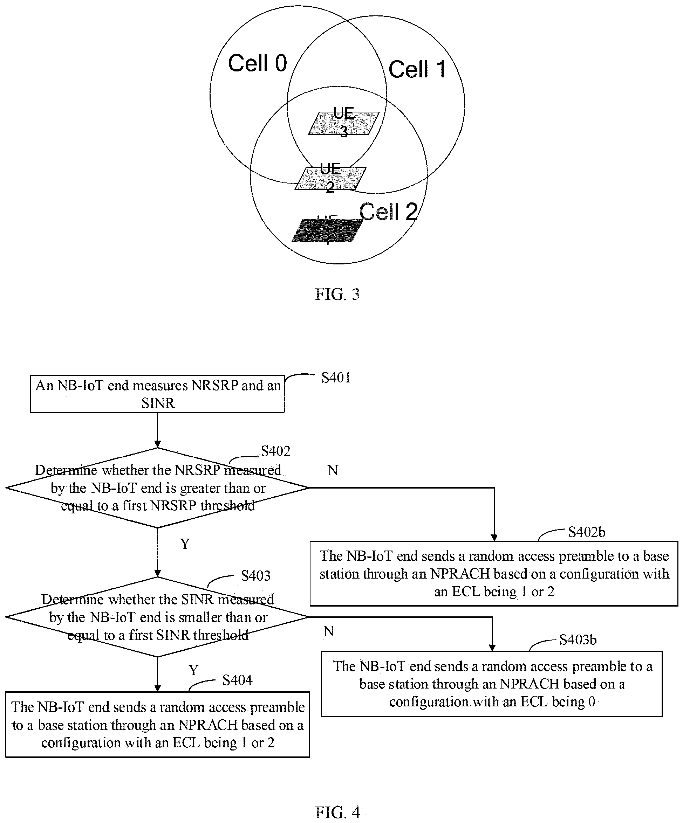

Because spectrum resources of operators are very precious, a same-frequency networking strategy is adopted in most situations, inevitably resulting in interference between cells. FIG. 3 is a schematic diagram of interference between cells. As shown in FIG. 3, NRSRP measured by a UE in an overlapping area of cells is great, but an SINR measured by the UE may be small due to interference in cells 0, 1 and 2 in a same-frequency networking situation. For example, there is a large probability that interference may exist at positions of UE2 and UE3, and as a result, SINRs measured by the UEs may be very small. UE3 is used as an example for illustration. NRSRP measured by UE3 is great, but a ratio of strength of a useful signal sent by the base station and received by UE3 to a sum of strength of interference and noise is low. The strength of interference is strength of an interference signal received by UE3, and the strength of noise is strength of a noise signal received by UE3. If UE3 determines that the ECL is 0 and attempts to access the base station based on the configuration with the ECL being 0, a quantity of times that UE3 repeatedly sends an NPRACH messages is small. In this case, the base station may not receive the NPRACH message, or the base station may not successfully demodulate the received NPRACH message. In this embodiment, the NPRACH message is a message sent through the NPRACH. In a process in which the UE accesses the base station, the NPRACH message is a random access preamble. Even if the base station successfully demodulates the NPRACH message, after the base station obtains ECL information carried in the NPRACH message, the base station performs scheduling based on radio resource configuration information corresponding to the ECL being 0, to return an RAR to UE3. After the base station confirms that the ECL is 0, an RAR time window allocated by the base station to UE3 is short, that is, a quantity of times that the bases station repeatedly returns the RAR to UE3 is small. In this case, UE3 may not receive the RAR, or UE3 may receive the RAR returned by the base station but cannot successfully demodulate the RAR. If UE3 cannot successfully demodulate the RAR delivered by the base station under the configuration with the ECL being 0, the UE can only continue to attempt to access the base station based on the configuration with the ECL being 0, until a maximum quantity of attempts that corresponds to the ECL being 0 is reached, and then the UE increases the ECL for an attempt. Specific data is used herein as an example for illustration. The NRSRP measured by UE3 is -90 dBm, but the SINR measured by UE3 is -8 dB. Assuming that the NRSRP measured by UE3 is greater than an NRSRP threshold sent by the base station to the UE, UE3 sends the NPRACH message to the base station based on the configuration with the ECL being 0. However, because the SINR is small, UE3 does not receive the RAR returned by the base station, or UE3 cannot successfully demodulate the RAR returned by the base station. Then, when a quantity of attempts made by UE3 to access the base station under the configuration with the ECL being 0 reaches the maximum quantity of attempts that corresponds to the ECL being 0, UE3 sends the NPRACH message to the base station based on a quantity of repetitions corresponding to the ECL being 1. After a quantity of attempts made by UE3 to access the base station under the configuration with the ECL being 1 reaches a maximum quantity of attempts corresponding to the ECL being 1, if UE3 still does not receive the RAR sent by the base station or cannot demodulate the RAR returned by the base station, UE3 attempts to send the NPRACH message to the base station based on a quantity of repetitions corresponding to the ECL being 2. When UE3 sends the NPRACH message to the base station based on the configuration with the ECL being 1, 2 or 3, a respective success rate that the UE successfully demodulates the RAR returned by the base station is different. A greater ECL of the UE leads to a higher success rate that the UE successfully demodulates the received RAR. In the situation described in this embodiment, UE3 can successfully demodulate the RAR returned by the base station only when UE3 sends the NPRACH message to the base station based on the configuration with the ECL being 1 or even 2. As a result, an attempt made by UE3 to send the NPRACH message based on the configuration with the ECL being 0 is a kind of waste. In particular, UE3 is likely to attempt to access the base station for many times under the configuration with the ECL being 0. Therefore, if threshold decision-making is made only based on the NRSRP, as specified in a protocol, data transmission time may be longer due to an improper ECL configuration. As a result, more time and more power are consumed to set up a connection between the base station and the NB-IoT.

In this embodiment, the SINR is a ratio of strength of a useful signal sent by the base station and received by an NB-IoT end to interference plus noise. Briefly, a sufficient SINR is required for basic normal communication between the UE and the base station. The SINR can be illustrated as a ratio of reference signal power S in a sounding bandwidth of the UE to interference plus noise power (I+N), namely, S/(I+N). The reference signal power is power of a narrowband reference signal (NRS), and (I+N) can be illustrated as a sum of interference of a non-serving cell on the reference signal, interference of an adjacent channel, and thermal noise power in the system. The SINR reflects link quality of a current channel and is an important index for measuring performance of the UE.

When the NB-IoT end sends the NPRACH message to the base station under different ECL configurations, the NB-IoT may or may not receive the RAR returned by the base station. When the NB-IoT end does not receive the RAR returned by the base station, the NB-IoT end regards that the base station does not receive the NPRACH message. When the NB-IoT end receives the RAR returned by the base station, a greater ECL configured by the UE leads to a higher success rate that the NB-IoT end demodulates the RAR returned by the base station. The SINR is added as one of evaluation parameters to determine the ECL configuration. In this way, an ECL determined by the NB-IoT end is more suitable for a current communication environment, and the NB-IoT end can successfully demodulate, with less time and power, the RAR delivered by the base station, so as to successfully set up the connection between the NB-IoT end and the base station. In this embodiment, the NB-IoT end may be a UE or an NB-IoT chip. This embodiment provides description by using an example in which the NB-IoT end is a UE. Before determining to access the base station, the UE can obtain a target value list of reference signal receiving power (RSRP) of the base station through cell broadcasting, by comparing its own RSRP with the target value list of the RSRP of the base station, and comparing its measured SINR with an SINR threshold, an ECL of the UE can be determined. In this embodiment, the target value list of the RSRP of the base station includes at least a first NRSRP threshold. In addition, the target value list may further include a second NRSRP threshold. After the NB-IoT end determines the ECL, each ECL is configured with a corresponding NPRACH resource to specify a maximum quantity of access attempts corresponding to the ECL and transmit power of the random access preamble. Then, the NB-IoT end can send the NPRACH message to the base station. Specifically, after the UE determines to access the base station, the random access preamble can be sent with reference to a data transmission method for an NB-IoT end as shown in FIG. 4, to realize a connection between the UE and the base station. The data transmission method for an NB-IoT end in this embodiment includes the following steps:
S401: An NB-IoT end measures NRSRP and an SINR.
S402: Determine whether the NRSRP measured by the NB-IoT end is greater than or equal to a first NRSRP threshold; and if the NRSRP measured by the NB-IoT end is greater than or equal to the first NRSRP threshold, perform step S403, or if the NRSRP measured by the NB-IoT end is not greater than or equal to the first NRSRP threshold, perform step S402b.
S402b: The NB-IoT end sends a random access preamble to a base station through an NPRACH based on a configuration with an ECL being 1 or 2.
S403: Determine whether the SINR measured by the NB-IoT end is smaller than or equal to a first SINR threshold; and if the SINR measured by the NB-IoT end is smaller than or equal to the first SINR threshold, perform step S404, or if the SINR measured by the NB-IoT end is not smaller than or equal to the first SINR threshold, perform step S403b.
S404: The NB-IoT end sends a random access preamble to a base station through an NPRACH based on a configuration with an ECL being 1 or 2.
S403b: The NB-IoT end sends a random access preamble to a base station through an NPRACH based on a configuration with an ECL being 0.

In this embodiment, before the UE sends an NPRACH message, the UE may measure many parameters, such as the SINR and the NRSRP. Generally, in some application situations, for example, after the UE is powered off or faulty, the UE may be disconnected from the base station. After the UE is disconnected from the base station, if the UE wants to set up a connection to the base station again, the data transmission method provided in this embodiment of the present disclosure can be adopted. After determining an appropriate ECL, the NB-IoT end sends the random access preamble to the base station based on the ECL, such that the UE accesses the base station with less time and power.

In the embodiment as shown in FIG. 4, when the NRSRP of the NB-IoT end is greater than or equal to the first NRSRP threshold, and the SINR of the NB-IoT end is smaller than or equal to the first SINR threshold, the NB-IoT end sends the random access preamble to the base station based on the configuration with the ECL being 1 or 2. In this embodiment, in addition to the measured NRSRP, the SINR is also introduced as one of judgment criteria, in other words, the ECL is determined based on the NRSRP and the SINR that are measured by the NB-IoT end. For some situations with great NRSRP and small SINR, such as a same-frequency interference situation, if the solution in this embodiment of the present disclosure is adopted, the ECL is set to 1 or 2. This presents the UE from attempting to access the base station based on the configuration with the ECL being 0 in these situations, such that the UE does not take long time to access the base station. In this embodiment, in a situation in which the measured NRSRP is greater than or equal to the first NRSRP threshold and the measured SINR is smaller than or equal to the first SINR threshold, after sending the random access preamble to the base station based on the configuration with the ECL being 1 or 2, the UE can receive an RAR returned by the base station and successfully demodulate the RAR, thereby helping the NB-IoT end access the base station quickly with low power consumption. The solution provided in this embodiment of the present disclosure is improved compared with an ECL determining solution in an existing protocol. Through actual measurement, it is found that about 30% of positions have same-frequency interference, and a typical business in these 30% of positions wastes more than 60% of time and electric energy due to the same-frequency interference. Although a probability that the same-frequency interference situation exists is appropriately reduced after NB-IoT network optimization, a problem that the data transmission time is long and power is wasted in this situation cannot be actually resolved. However, the data transmission method for an NB-IoT end proposed in this solution can essentially resolve this problem.

Based on the content disclosed in the above embodiments, an embodiment of the present disclosure provides a data transmission method for an NB-IoT end. As show in FIG. 4, when the NRSRP measured by the NB-IoT end is greater than or equal to the first NRSRP threshold, and the SINR measured by the NB-IoT end is greater than the first SINR threshold, it indicates that communication between the base station and the NB-IoT end has good quality, and there is no same-frequency interface or weak same-frequency interference between UEs. In this case, the NB-IoT end can attempt to access the base station based on the configuration with the ECL being 0. For example, the UE may send the NPRACH message to the base station based on the configuration with the ECL being 0, to avoid a waste of communication resources due to an increase of a quantity of repetitions of transmission of the NPRACH message because the ECL is set to 1 or 2 for the UE when the communication quality is good. For another example, it is assumed that a quantity of times of repeatedly sending the NPRACH message by the UE is eight when the ECL is 1, and a quantity of times of repeatedly sending the NPRACH message by the UE is two when the ECL is 0, if the measured NRSRP is greater than the first NRSRP threshold and the measured SINR is smaller than the first SINR threshold, the ECL may be set to 1, in other words, when the quantity of times of repeatedly sending the NRSRP message is eight, the UE can successfully demodulate the RAR returned by the base station. In the same situation, it is assumed that the ECL is set to 0 for the UE, after the UE sends the NPRACH message to the base station twice, the UE may not receive the RAR sent by the base station, or the UE receives the RAR but cannot successfully demodulate the RAR, then, the UE sends the NPRACH message to the UE based on the configuration with the ECL being 0, the UE may attempt to send the NPRACH message to the UE based on the configuration with the ECL being 0 for many times, and when a maximum quantity of access attempts under the configuration with the ECL being 0 is reached, if the UE does not receive the RAR returned by the base station or the UE fails to demodulate the RAR, the UE performs an access attempt based on the configuration with the ECL being 1, and the UE sends the NPRACH message to the base station, the UE needs to repeatedly send the NPRACH message for eight times to complete one access attempt under the configuration with the ECL being 1, in this case, the base station returns the RAR to the UE after receiving the NPRACH message, and the UE can successfully demodulate the RAR returned by the base station. As a result, a waste of power and time is caused when the UE sends the NPRACH message to the base station based on the configuration with the ECL being 0 and the maximum quantity of access attempts. In addition, in this embodiment, the quantity of repetitions of the NPRACH message is set to 2 when the ECL is 0, 8 when the ECL is 1, and 16 when the ECL is 2. The quantity of repetitions of the NPRACH message is configured based on the ECL, which can basically meet a communication requirement of an NB-IoT device. Specific data of the quantity of repetitions in this embodiment of the present disclosure is merely illustrative, and a user may adjust a specific value of the quantity of repetitions based on actual requirements.

Based on the content disclosed in the above embodiments, an embodiment of the present disclosure provides a data transmission method for an NB-IoT end. As show in FIG. 4, when the NRSRP measured by the NB-IoT end is smaller than the first NRSRP threshold, the NB-IoT end sends the random access preamble to the base station based on the configuration with the ECL being 1 or 2. When the NRSRP measured by the UE is small, a large quantity of repetituions of transmission is required to ensure that the UE receives and demodulates the RAR returned by the base station, so as to further realize the connection between the NB-IoT end and the base station. Therefore, in this situation, sending the random access preamble to the base station based on the configuration with the ECL being 1 or 2 can enable the UE to access the base station with less time and power.

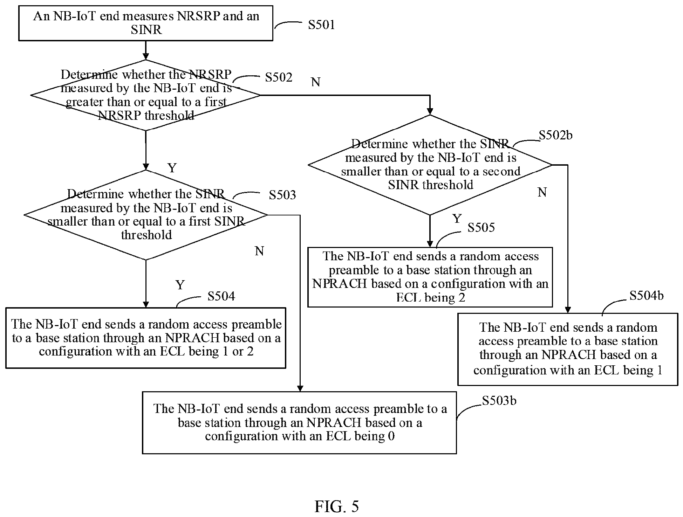

Based on the content disclosed in the above embodiments, an embodiment of the present disclosure provides a data transmission method for an NB-IoT end. As shown in FIG. 5, in this embodiment, a second SINR threshold is set, and the second SINR threshold is smaller than a first SINR threshold. The data transmission method for an NB-IoT end in this embodiment includes the following steps:
S501: An NB-IoT end measures NRSRP and an SINR.
S502: Determine whether the NRSRP measured by the NB-IoT end is greater than or equal to a first NRSRP threshold; and if the NRSRP measured by the NB-IoT end is greater than or equal to the first NRSRP threshold, perform step S503, or if the NRSRP measured by the NB-IoT end is not greater than or equal to the first NRSRP threshold, perform step S502b.
S502b: Determine whether the SINR measured by the NB-IoT end is smaller than or equal to the second SINR threshold; and if the SINR measured by the NB-IoT end is smaller than or equal to the second SINR threshold, perform step S505, or if the SINR measured by the NB-IoT end is not smaller than or equal to the second SINR threshold, perform step S504b.
S505: The NB-IoT end sends a random access preamble to a base station through an NPRACH based on a configuration with an ECL being 2.
S504b: The NB-IoT end sends a random access preamble to a base station through an NPRACH based on a configuration with an ECL being 1.
S503: Determine whether the SINR measured by the NB-IoT end is smaller than or equal to the first SINR threshold; and if the SINR measured by the NB-IoT end is smaller than or equal to the first SINR threshold, perform step S504, or if the SINR measured by the NB-IoT end is not smaller than or equal to the first SINR threshold, perform step S503b.
S504: The NB-IoT end sends a random access preamble to a base station through an NPRACH based on a configuration with an ECL being 1 or 2.
S503b: The NB-IoT end sends a random access preamble to a base station through an NPRACH based on a configuration with an ECL being 0.

In this embodiment, steps S501, S502, S503, S504, and S503b are the same as or similar to steps S401, S402, S403, S404, and S403b in the foregoing embodiment. Details are not described herein again.

Based on the content disclosed in the above embodiments, an embodiment of the present disclosure provides a data transmission method for an NB-IoT end. As shown in FIG. 5, when the NRSRP measured by the NB-IoT end is smaller than the first NRSRP threshold, and the SINR measured by the NB-IoT end is smaller than or equal to the second SINR threshold, the NB-IoT end sends an NPRACH message to the base station based on the configuration with the ECL being 2. In a situation in which the NRSRP is smaller than the first NRSRP threshold and the SINR is smaller than or equal to the second SINR threshold, if the UE sends the NPRACH message to the base station based on the configuration with the ECL being 0 or 1, the UE may not receive an RAR returned by the base station or the UE fails to demodulate the RAR returned by the base station. Therefore, in this situation, the ECL of the UE is set to 2, to avoid a case that more time and power are consumed because the UE sends the NPRACH message under the configuration with the ECL being 0 or 1 and the UE does not receive the RAR returned by the base station or fails to demodulate the RAR.

Based on the content disclosed in the above embodiments, an embodiment of the present disclosure provides a data transmission method for an NB-IoT end. As shown in FIG. 5, when the NRSRP measured by the NB-IoT end is smaller than the first NRSRP threshold and the SINR measured by the NB-IoT end is greater than the second SINR threshold, the NB-IoT end sends the random access preamble to the base station based on the configuration with the ECL being 1. In this embodiment, the NRSRP measured by the UE is smaller than the first NRSRP threshold, therefore, in this situation, there is a high probability that the SINR measured by the UE is also smaller than the first SINR threshold. In this case, the measured SINR can be directly compared with the second SINR threshold to determine whether the ECL should be set to 1 or 2, thereby avoiding comparison between the measured SINR and the first SINR threshold. When the measured SINR is greater than the second SINR threshold, it indicates that the measured SINR is not too small. Therefore, the configuration with the ECL being 1 is selected to transmit data with the base station, which can not only avoid a waste of time and power caused when the UE attempts to access the base station under the configuration with the ECL being 0, but also avoid a waste of communication resources due to an increase of a quantity of repetitions of the NPRACH message under the configuration with the ECL being 2. In addition, this embodiment avoids comparison between the measured SINR and the first SINR threshold when the measured NRSRP is smaller than the first NRSRP threshold, thereby further reducing power and time consumption.

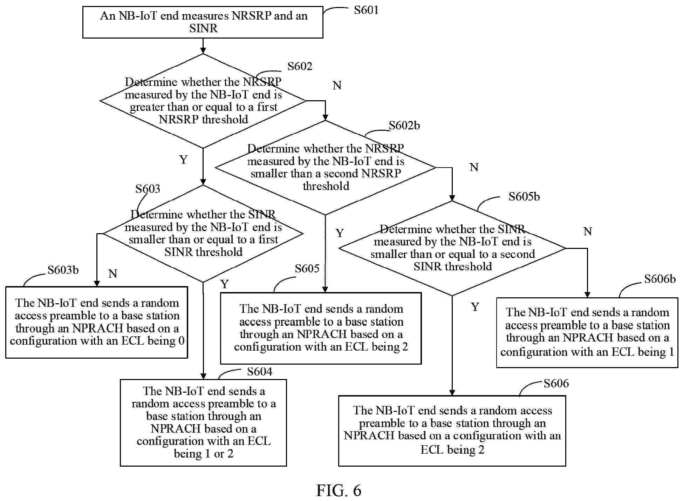

Based on the content disclosed in the above embodiments, an embodiment of the present disclosure provides a data transmission method for an NB-IoT end. As shown in FIG. 6, in this embodiment, a second NRSRP threshold is set, and the second NRSRP threshold is smaller than a first NRSRP threshold. The data transmission method for an NB-IoT end in this embodiment includes the following steps:
S601: An NB-IoT end measures NRSRP and an SINR.
S602: Determine whether the NRSRP measured by the NB-IoT end is greater than or equal to the first NRSRP threshold; and if the NRSRP measured by the NB-IoT end is greater than or equal to the first NRSRP threshold, perform step S603, or if the NRSRP measured by the NB-IoT end is not greater than or equal to the first NRSRP threshold, perform step S602b.
S602b: Determine whether the NRSRP measured by the NB-IoT end is smaller than the second NRSRP threshold; and if the NRSRP measured by the NB-IoT end is smaller than the second NRSRP threshold, perform step S605, or if the NRSRP measured by the NB-IoT end is not smaller than the second NRSRP threshold, perform step S605b.
S605: The NB-IoT end sends a random access preamble to a base station through an NPRACH based on a configuration with an ECL being 2.
S605b: Determine whether the SINR measured by the NB-IoT end is smaller than or equal to a second SINR threshold; and if the SINR measured by the NB-IoT end is smaller than or equal to the second SINR threshold, perform step S606, or if the SINR measured by the NB-IoT end is not smaller than or equal to the second SINR threshold, perform step S606b.
S606: The NB-IoT end sends a random access preamble to a base station through an NPRACH based on a configuration with an ECL being 2.
S606b: The NB-IoT end sends a random access preamble to a base station through an NPRACH based on a configuration with an ECL being 1.
S603: Determine whether the SINR measured by the NB-IoT end is smaller than or equal to a first SINR threshold; and if the SINR measured by the NB-IoT end is smaller than or equal to the first SINR threshold, perform step S604, or if the SINR measured by the NB-IoT end is not smaller than or equal to the first SINR threshold, perform step S603b.
S604: The NB-IoT end sends a random access preamble to a base station through an NPRACH based on a configuration with an ECL being 1 or 2.
S603b: The NB-IoT end sends a random access preamble to a base station through an NPRACH based on a configuration with an ECL being 0.

In this embodiment, steps S601, S602, S603, S604, and S603b are the same as or similar to steps S401, S402, S403, S404, and S403b in the foregoing embodiment. Details are not described herein again.

Based on the content disclosed in the above embodiments, an embodiment of the present disclosure provides a data transmission method for an NB-IoT end. As shown in FIG. 6, after the measured NRSRP is compared with the first NRSRP threshold, if the measured NRSRP is smaller than the first NRSRP threshold, the measured NRSRP is further compared with the second NRSRP threshold. If the measured NRSRP is smaller than the second NRSRP threshold, the UE sends an NPRACH message to the base station based on the configuration with the ECL being 2. When the NRSRP is very small, the ECL is set to 2, to avoid a waste of power and time caused when the UE attempts to access the base station when the UE sets the ECL to 0 or 1. If the measured NRSRP is greater than or equal to the second NRSRP threshold, the measured SINR is further compared with the second SINR threshold. If the measured SINR is greater than the second SINR threshold, the UE sets the ECL to 1. If the measured SINR is smaller than or equal to the second SINR threshold, the UE sets the ECL to 2. In this embodiment, first the measured NRSRP is compared with the first NRSRP threshold, then the measured NRSRP is compared with the second NRSRP threshold, and finally the measured SINR is compared with the second SINR threshold. By comparing the measured SINR and NRSRP and their corresponding thresholds for many times, the ECL of the UE can be accurately configured to reduce power and time consumption.

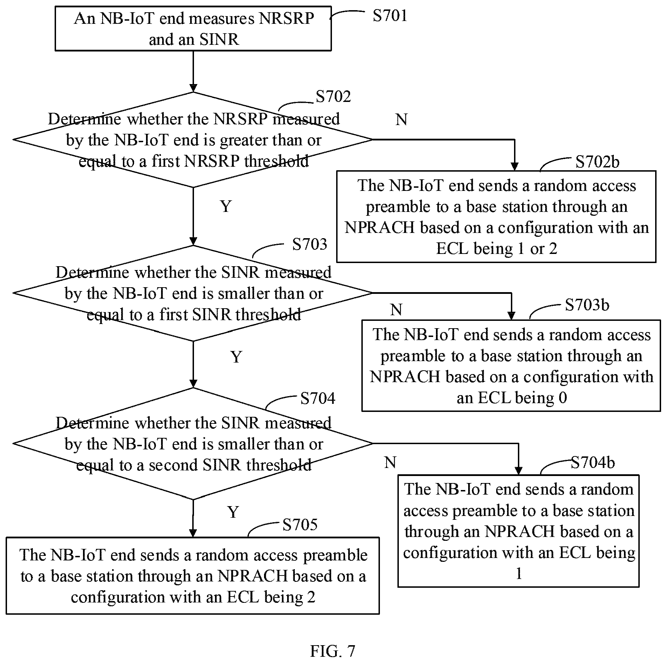

Based on the content disclosed in the above embodiments, an embodiment of the present disclosure provides a data transmission method for an NB-IoT end. As shown in FIG. 7, in this embodiment, a second SINR threshold is set, and the second SINR threshold is smaller than a first SINR threshold. The data transmission method for an NB-IoT end in this embodiment includes the following steps:
S701: An NB-IoT end measures NRSRP and an SINR.
S702: Determine whether the NRSRP measured by the NB-IoT end is greater than or equal to a first NRSRP threshold; and if the NRSRP measured by the NB-IoT end is greater than or equal to the first NRSRP threshold, perform step S703, or if the NRSRP measured by the NB-IoT end is not greater than or equal to the first NRSRP threshold, perform step S702b.
S702b: The NB-IoT end sends a random access preamble to a base station through an NPRACH based on a configuration with an ECL being 1 or 2.
S703: Determine whether the SINR measured by the NB-IoT end is smaller than or equal to the first SINR threshold; and if the SINR measured by the NB-IoT end is smaller than or equal to the first SINR threshold, perform step S704, or if the SINR measured by the NB-IoT end is not smaller than or equal to the first SINR threshold, perform step S703b.
S704: Determine whether the SINR measured by the NB-IoT end is smaller than or equal to the second SINR threshold; and if the SINR measured by the NB-IoT end is smaller than or equal to the second SINR threshold, perform step S705, or if the SINR measured by the NB-IoT end is not smaller than or equal to the second SINR threshold, perform step S704b.
S703b: The NB-IoT end sends a random access preamble to a base station through an NPRACH based on a configuration with an ECL being 0.
S705: The NB-IoT end sends a random access preamble to a base station through an NPRACH based on a configuration with an ECL being 2.
S704b: The NB-IoT end sends a random access preamble to a base station through an NPRACH based on a configuration with an ECL being 1.

In this embodiment, steps S701, S702, S702b, S703, and S703b are the same as or similar to steps S401, S402, S402b, S403, and S403b in the foregoing embodiment. Details are not described herein again.

Based on the content disclosed in the above embodiments, an embodiment of the present disclosure provides a data transmission method for an NB-IoT end. As shown in FIG. 7, when the NRSRP measured by the NB-IoT end is greater than or equal to the first NRSRP threshold, and the SINR measured by the NB-IoT end is smaller than or equal to the first SINR threshold, the measured SINR is further compared with the second SINR threshold. If the measured SINR is smaller than or equal to the second SINR threshold, the UE may send the random access preamble to the base station based on the configuration with the ECL being 2, to attempt to access the base station. If the measured SINR is greater than the second SINR threshold, the UE may send the random access preamble to the base station based on the configuration with the ECL being 1, to attempt to access the base station. In this embodiment, when the NRSRP is greater than or equal to the first NRSRP threshold, the measured SINR is compared with the first SINR threshold and the second SINR threshold to determine an appropriate ECL configuration, thereby avoiding a waste of power and increasing time consumption.

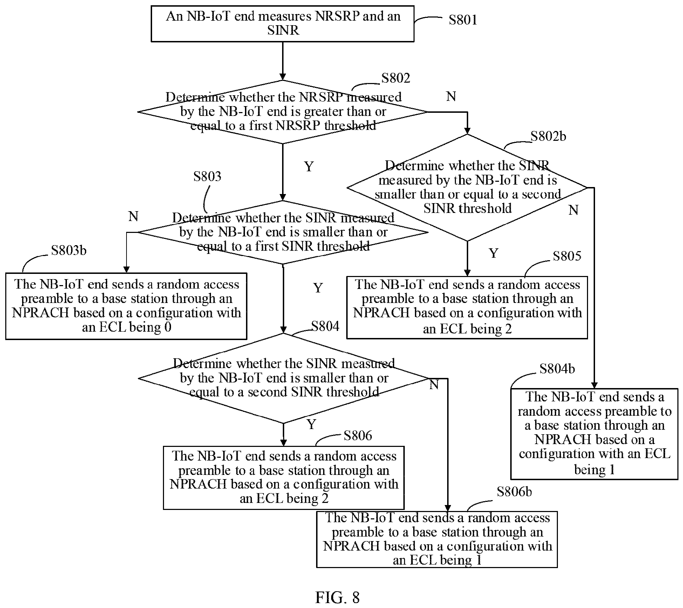

Based on the content disclosed in the above embodiments, an embodiment of the present disclosure provides a data transmission method for an NB-IoT end. As shown in FIG. 8, compared with the embodiment in FIG. 5, this embodiment further describes step S504 in the embodiment shown in FIG. 5, to specifically describe a situation in which the ECL is set to 1 and a situation in which the ECL is set to 2. Specifically, the data transmission method for an NB-IoT end in this embodiment includes the following steps:
S801: An NB-IoT end measures NRSRP and an SINR.
S802: Determine whether the NRSRP measured by the NB-IoT end is greater than or equal to a first NRSRP threshold; and if the NRSRP measured by the NB-IoT end is greater than or equal to the first NRSRP threshold, perform step S803, or if the NRSRP measured by the NB-IoT end is not greater than or equal to the first NRSRP threshold, perform step S802b.
S802b: Determine whether the SINR measured by the NB-IoT end is smaller than or equal to a second SINR threshold; and if the SINR measured by the NB-IoT end is smaller than or equal to the second SINR threshold, perform step S805, or if the SINR measured by the NB-IoT end is not smaller than or equal to the second SINR threshold, perform step S804b.
S805: The NB-IoT end sends a random access preamble to a base station through an NPRACH based on a configuration with an ECL being 2.
S804b: The NB-IoT end sends a random access preamble to a base station through an NPRACH based on a configuration with an ECL being 1.
S803: Determine whether the SINR measured by the NB-IoT end is smaller than or equal to a first SINR threshold; and if the SINR measured by the NB-IoT end is smaller than or equal to the first SINR threshold, perform step S804, or if the SINR measured by the NB-IoT end is not smaller than or equal to the first SINR threshold, perform step S803b.
S804: Determine whether the SINR measured by the NB-IoT end is smaller than or equal to a second SINR threshold; and if the SINR measured by the NB-IoT end is smaller than or equal to the second SINR threshold, perform step S806, or if the SINR measured by the NB-IoT end is not smaller than or equal to the second SINR threshold, perform step S806b.
S803b: The NB-IoT end sends a random access preamble to a base station through an NPRACH based on a configuration with an ECL being 0.
S806: The NB-IoT end sends a random access preamble to a base station through an NPRACH based on a configuration with an ECL being 2.
S806b: The NB-IoT end sends a random access preamble to a base station through an NPRACH based on a configuration with an ECL being 1.

In this embodiment, steps S801, S802, S802b, S803, S803b, S804b, and S805 are the same as or similar to steps S501, S502, S502b, S503, S503b, S504b, and S505 in the foregoing embodiment. Details are not described herein again.

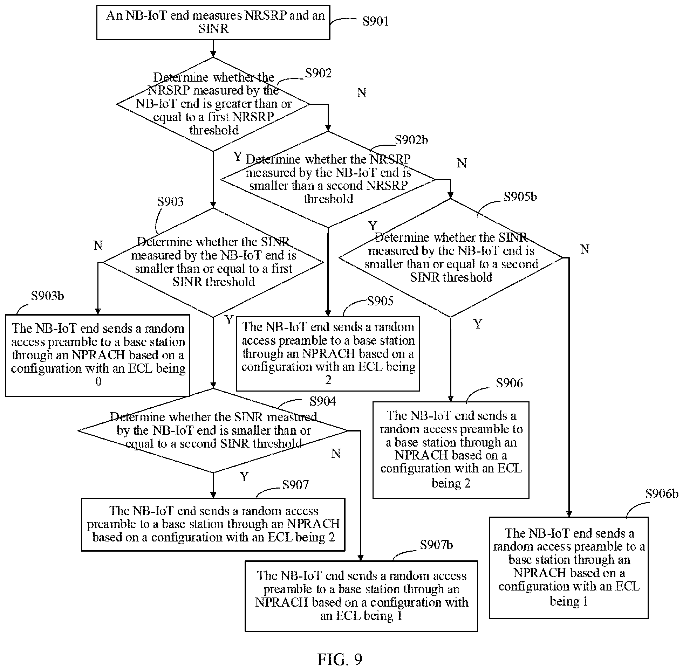

Based on the content disclosed in the above embodiments, an embodiment of the present disclosure provides a data transmission method for an NB-IoT end. As shown in FIG. 9, compared with the embodiment shown in FIG. 6, this embodiment further describes step S604 in the embodiment in FIG. 6, to specifically describe a situation in which the ECL is set to 1 and a situation in which the ECL is set to 2. Specifically, the data transmission method for an NB-IoT end in this embodiment includes the following steps:
S901: An NB-IoT end measures NRSRP and an SINR.
S902: Determine whether the NRSRP measured by the NB-IoT end is greater than or equal to a first NRSRP threshold; and if the NRSRP measured by the NB-IoT end is greater than or equal to the first NRSRP threshold, perform step S903, or if the NRSRP measured by the NB-IoT end is not greater than or equal to the first NRSRP threshold, perform step S902b.
S902b: Determine whether the NRSRP measured by the NB-IoT end is smaller than a second NRSRP threshold; and if the NRSRP measured by the NB-IoT end is smaller than the second NRSRP threshold, perform step S905, or if the NRSRP measured by the NB-IoT end is not smaller than the second NRSRP threshold, perform step S905b.
S905: The NB-IoT end sends a random access preamble to a base station through an NPRACH based on a configuration with an ECL being 2.
S905b: Determine whether the SINR measured by the NB-IoT end is smaller than or equal to a second SINR threshold; and if the SINR measured by the NB-IoT end is smaller than or equal to the second SINR threshold, perform step S906, or if the SINR measured by the NB-IoT end is not smaller than or equal to the second SINR threshold, perform step S906b.
S906: The NB-IoT end sends a random access preamble to a base station through an NPRACH based on a configuration with an ECL being 2.
S906b: The NB-IoT end sends a random access preamble to a base station through an NPRACH based on a configuration with an ECL being 1.
S903: Determine whether the SINR measured by the NB-IoT end is smaller than or equal to a first SINR threshold; and if the SINR measured by the NB-IoT end is smaller than or equal to the first SINR threshold, perform step S904, or if the SINR measured by the NB-IoT end is not smaller than or equal to the first SINR threshold, perform step S903b.
S904: Determine whether the SINR measured by the NB-IoT end is smaller than or equal to a second SINR threshold; and if the SINR measured by the NB-IoT end is smaller than or equal to the second SINR threshold, perform step S907, or if the SINR measured by the NB-IoT end is not smaller than or equal to the second SINR threshold, perform step S907b.
S903b: The NB-IoT end sends a random access preamble to a base station through an NPRACH based on a configuration with an ECL being 0.
S907: The NB-IoT end sends a random access preamble to a base station through an NPRACH based on a configuration with an ECL being 2.
S907b: The NB-IoT end sends a random access preamble to a base station through an NPRACH based on a configuration with an ECL being 1.

In this embodiment, steps S901, S902, S902b, S903, S903b, S905, S905b, S906, and S906b are the same as or similar to steps S601, S602, S602b, S603, S603b, S605, S605b, S606, and S606b in the foregoing embodiment. Details are not described herein again.

Based on the content disclosed in the above embodiments, in this embodiment, the second SINR threshold may be determined based on a scheduling parameter of the base station. Specifically, when the NB-IoT end attempts to connect to the base station based on the configuration with the ECL being 0, if a success rate of demodulating an RAR by the UE is smaller than a preset success rate, it indicates that the ECL of the UE should be set to 1 or 2. In this situation, the second SINR threshold may be increased, such that the original ECL can be adjusted from 0 to 1 or 2. When the NB-IoT end attempts to access the base station based on the configuration with the ECL being 1, if a data demodulation success rate of the UE is smaller than a preset success rate, it indicates that the ECL of the UE should be set to 2. In this situation, the second SINR threshold may be increased, such that the original ECL can be adjusted from 1 to 2. In this embodiment, the preset success rate may be set to be greater than or equal to 50%. When the preset success rate is set to be greater than or equal to 50%, the UE basically performs normally in each aspect during actual measurement. For example, the preset success rate may be set to any value of 50% to 70%. For another example, the preset success rate may be set to 80%. When the preset success rate is set to 80%, a basic communication demand can be guaranteed, and the UE performs well in each aspect during actual measurement. In actual situations, since it is impossible to completely avoid interference and noise, if a high preset success rate is set, a SINR threshold may be set excessively great, as a result, many UEs set the ECL to 2. Therefore, considering power consumption, the preset success rate may be set to 70%, which can not only ensure an access success rate, but also reduce the power consumption. In this embodiment, the second SINR threshold can be adjusted to ensure that the ECL configuration is still accurate when a communication environment changes. In addition, the second SINR threshold may be determined based on a data demodulation success rate corresponding to a specific ECL configuration. For example, for the UE, if the data demodulation success rate is greater than 70% when the ECL is 1, an SINR measured when the ECL is 1 and the data demodulation success rate is greater than 70% may be set as the second SINR threshold. Specifically, the second SINR threshold may be set to -4 dB. When the second SINR threshold is applied to the above embodiments, accuracy of the ECL configuration of the UE can be improved.

Based on the content disclosed in the above embodiments, in this embodiment, the first SINR threshold may be determined based on the scheduling parameter of the base station. Specifically, when the NB-IoT end performs data communication with the base station based on the configuration with the ECL being 0, if the data demodulation success rate of the UE is smaller than the preset success rate, it indicates that the ECL should be set to 1 or 2. In this situation, the first SINR threshold may be increased, such that the original ECL can be adjusted from 0 to 1 or 2. When the NB-IoT end performs data communication with the base station based on the configuration with the ECL being 1, if the data demodulation success rate of the UE is smaller than the preset success rate, it indicates that the ECL should be set to 2. In this situation, the first SINR threshold may be increased, such that the original ECL can be adjusted from 1 to 2. In this embodiment, the preset success rate may be set to be greater than or equal to 50%, for example, may be set to any value of 50% to 70%. For another example, the preset success rate may be set to 80%. When the preset success rate is set to 80%, the basic communication demand can be guaranteed, and the UE performs well in each aspect during actual measurement. In actual situations, since it is impossible to completely avoid interference and noise, if a high preset success rate is set, a SINR threshold may be set excessively great, as a result, many UEs set the ECL to 2. Therefore, considering the power consumption, the preset success rate may be set to 70%. The first SINR threshold can be adjusted to ensure that the ECL configuration can be automatically adjusted based on a change of the threshold when the communication environment changes. Specifically, the first SINR threshold may be determined based on a data demodulation success rate corresponding to a specific ECL configuration. For example, for the UE, if the data demodulation success rate is greater than 70% when the ECL is 0, an SINR measured when the ECL is 0 and the data demodulation success rate is greater than 70% may be set as the first SINR threshold. Specifically, the first SINR threshold may be set to 5 dB. When the first SINR threshold is applied to the above embodiments, the accuracy of the ECL configuration can be improved. In addition, the first NRSRP threshold is delivered by the base station to the UE. For example, the first NRSRP threshold received by the UE may be - 110 dBm. When the first NRSRP threshold is applied to the above embodiments, the basic communication demand can be met.

Based on the content disclosed in the above embodiments, in this embodiment, an NPRACH message, namely, the random access preamble used to realize the connection between the NB-IoT end and the base station, is transmitted during data transmission between the UE and the base station. After the UE sends the random access preamble to the base station based on the ECL determined by the UE, the base station may return the RAR to the UE based on the random access preamble, and the base station can perform resource configuration based on the ECL when sending the RAR to the UE.

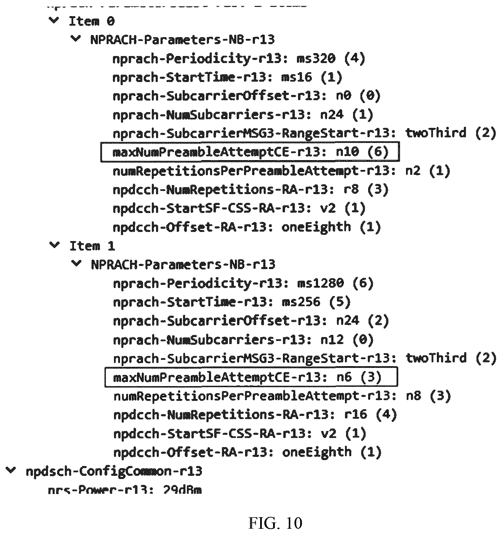

Based on the content disclosed in the above embodiments, in this embodiment, the NB-IoT end sends the random access preamble to the base station through the NPRACH, such that the base station performs scheduling based on radio resource configuration information corresponding to the ECL to send the RAR to the NB-IoT end. The radio resource configuration information may include at least one of a quantity of repetitions of the random access preamble (numRepetitionsPerPreambleAttempt), a time domain resource (including parameters such as a cycle and a start subframe position) of the NPRACH, a frequency domain resource (including parameters such as a subcarrier offset and a quantity of subcarriers) of the NPRACH, a maximum quantity of attempts (maxNumPreambleAttemptCE), and other parameters. The quantity of repetitions, corresponding to the ECL, of the random access preamble represents a quantity of times of repeatedly sending the random access preamble when the UE attempts to access the base station under the set ECL. For example, when the ECL is 0, the quantity of times of repeatedly sending the random access preamble is 2, in other words, the UE sends the random access preamble to the base station twice under the configuration with the ECL being 0. The maximum quantity of attempts can be illustrated as a maximum quantity of access attempts. The maximum quantity of access attempts corresponds to the ECL, in other words, a corresponding maximum quantity of attempts can be set for each ECL. For example, as shown in FIG. 10 that shows an ECL configuration, maxNumPreambleAttemptCE-r13:n10(6) under Item0 represents that the UE can attempt to access the base station for ten times based on the configuration with the ECL being 0. After the first attempt to access the base station based on the configuration with the ECL being 0 fails, the UE may attempt to access the base station again based on the configuration with the ECL being 0, until all the ten access attempts fail. Then, the UE attempts to access the base station based on the configuration with the ECL being 1. As shown in FIG. 10, maxNumPreambleAttemptCE-r13:n6(3) under Item1 represents that the UE can attempt to access the base station for six times based on the configuration with the ECL being 1. After the first attempt to access the base station based on the configuration with the ECL being 1 fails, the UE may attempt to access the base station again based on the configuration with the ECL being 1, until all the six access attempts fail. Then, the UE attempts to access the base station based on the configuration with the ECL being 2.

Based on the content disclosed in the above embodiments, in this embodiment, specifically, a current network configuration can be collected based on big data. After obtaining an accurate network configuration, an SINR measured by the UE when the UE can demodulate, under an NRSRP value, the RAR delivered by the base station can be determined. That is, an NRSRP threshold and an SINR threshold that support successful demodulation by the UE under each ECL configuration can be obtained through analysis based on the big data, and then the ECL configuration can be determined by comparing the thresholds with respective measured values. For example, assuming that the UE sends the NPRACH message to the base station based on the configuration with the ECL being 0, and an SINR, for example, 5 dB, measured when the demodulation success rate of the NB-IoT end is greater than 70% is the first SINR threshold, in other words, the first SINR threshold is 5 dB, then when the SINR measured by the NB-IoT end is greater than 5 dB, if the UE sends the NPRACH message to the NB-IoT end based on the configuration with the ECL being 0, the NB-IoT end can successfully demodulate the RAR returned by the base station. Assuming that the UE sends the NPRACH message to the base station based on the configuration with the ECL being 1, and an SINR, for example, -4 dB, measured when the demodulation success rate of the NB-IoT end is greater than 70% is the second SINR threshold, in other words, the second SINR threshold is -4 dB, then when the SINR measured by the NB-IoT end is greater than -4 dB, if the UE sends the NPRACH message to the base station based on the configuration with the ECL being 1, the UE can successfully demodulate the RAR returned by the base station. For the base station, assuming that the UE sends the NPRACH message to the base station based on the configuration with the ECL being 0, the base station can determine NRSRP, for example, -110 dBm, measured by the NB-IoT end when the demodulation success rate of the NB-IoT end is greater than 70%, as the first NRSRP threshold, in other words, the first NRSRP threshold may be -110 dBm, then after determining the first NRSRP threshold, the base station can send the first NRSRP threshold to the NB-IoT end; and when the NRSRP measured by the NB-IoT end is greater than or equal to -110 dBm and the SINR measured by the NB-IoT end is greater than 5 dB, if the UE sends the NPRACH message to the NB-IoT end based on the configuration with the ECL being 0, the UE can successfully demodulate the RAR returned by the base station. For the base station, assuming that the UE sends the NPRACH message to the base station based on the configuration with the ECL being 1, the base station can use NRSRP, for example, -120 dBm, measured by the NB-IoT end when the demodulation success rate of the NB-IoT end is greater than 70%, as the second NRSRP threshold, in other words, the second NRSRP threshold may be -120 dBm, then after determining the second NRSRP threshold, the base station can send the second NRSRP threshold to the NB-IoT end. How the base station specifically determines the first NRSRP threshold and the second NRSRP threshold is not limited in this embodiment. Specifically, this embodiment takes the above specific values as an example to describe the data transmission method for an NB-IoT end in the above embodiments.

Conditions for that the UE transmits the NPRACH message to the base station based on the configuration with the ECL being 0 are: the NRSRP measured by the UE is greater than or equal to -110 dBm, and the SINR measured by the UE is greater than 5 dB.

Conditions for that the UE transmits the NPRACH message to the base station based on the configuration with the ECL being 1 are: the measured NRSRP is greater than or equal to -110 dBm, and the measured SINR is greater than -4dB and smaller than or equal to 5 dB; or the measured NRSRP is smaller than -110 dBm and greater than -120 dBm, and the measured SINR is greater than -4dB.

Conditions for that the UE transmits the NPRACH message to the base station based on the configuration with the ECL being 2 are: the measured NRSRP is smaller than -120 dBm; or the measured NRSRP is greater than or equal to -120 dBm and smaller than -110 dBm, and the measured SINR is smaller than or equal to -4 dB; or the measured NRSRP is greater than or equal to -110 dBm, and the measured SINR is smaller than or equal to -4 dB. In this embodiment, it can also be understood that the ECL is determined as 2 provided that the SINR is smaller than or equal to -4dB, or the NRSRP is smaller than -120 dB.

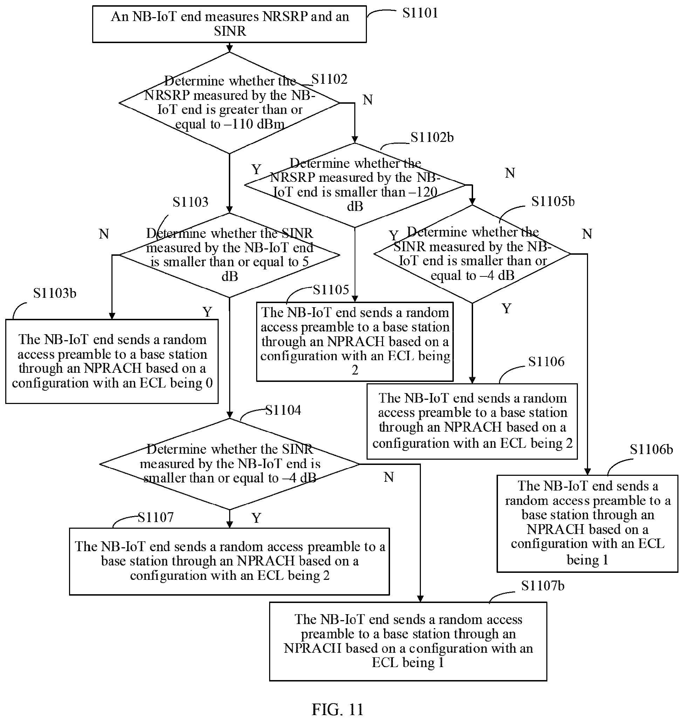

Based on the content disclosed in the above embodiments, as shown in FIG. 11, a data transmission method for an NB-IoT end in an embodiment includes the following steps:
S1101: An NB-IoT end measures NRSRP and an SINR.
S1102: Determine whether the NRSRP measured by the NB-IoT end is greater than or equal to -110 dBm; and if the NRSRP measured by the NB-IoT end is greater than or equal to - 110 dBm, perform step S1103, or if the NRSRP measured by the NB-IoT end is not greater than or equal to -110 dBm, perform step S1102b.
51102b: Determine whether the NRSRP measured by the NB-IoT end is smaller than -120 dB; and if the NRSRP measured by the NB-IoT end is smaller than -120 dB, perform step S 1105, or if the NRSRP measured by the NB-IoT end is not smaller than -120 dB, perform step S1105b.
S1105: The NB-IoT end sends a random access preamble to a base station through an NPRACH based on a configuration with an ECL being 2.
51105b: Determine whether the SINR measured by the NB-IoT end is smaller than or equal to -4 dB; and if the SINR measured by the NB-IoT end is smaller than or equal to -4 dB, perform step S1106, or if the SINR measured by the NB-IoT end is not smaller than or equal to -4 dB, perform step 51106b.
S1106: The NB-IoT end sends a random access preamble to a base station through an NPRACH based on a configuration with an ECL being 2.
S1106b: The NB-IoT end sends a random access preamble to a base station through an NPRACH based on a configuration with an ECL being 1.
S1103: Determine whether the SINR measured by the NB-IoT end is smaller than or equal to 5 dB; and if the SINR measured by the NB-IoT end is smaller than or equal to 5 dB, perform step S1104, or if the SINR measured by the NB-IoT end is not smaller than or equal to 5 dB, perform step S1103b.
S1104: Determine whether the SINR measured by the NB-IoT end is smaller than or equal to -4 dB; and if the SINR measured by the NB-IoT end is smaller than or equal to -4 dB, perform step S1107, or if the SINR measured by the NB-IoT end is not smaller than or equal to -4 dB, perform step S1107b.
S1103b: The NB-IoT end sends a random access preamble to a base station through an NPRACH based on a configuration with an ECL being 0.
S1107: The NB-IoT end sends a random access preamble to a base station through an NPRACH based on a configuration with an ECL being 2.
S1107b: The NB-IoT end sends a random access preamble to a base station through an NPRACH based on a configuration with an ECL being 1.

This embodiment of the present disclosure provides a transmission strategy of the random access preamble during setup of a connection between the NB-IoT end and the base station, to reduce data transmission time and save power.

Based on the content disclosed in the above embodiments, in this embodiment, the first NRSRP threshold and the second NRSRP threshold may be delivered by the base station to the NB-IoT end. The first NRSRP threshold and the second NRSRP threshold may be adjusted by the base station based on an application situation and are not necessarily limited to the specific values provided in the above embodiments. The SINR threshold may also be referred to as an SINR demodulation threshold. In this embodiment, the first SINR threshold and the second SINR threshold may be determined by using the following three methods:

In a first method, if a scheduling parameter of the base station can be obtained, a typical conservative scheduling configuration of a current network can be obtained based on analysis of a large quantity of scheduling parameters of the base station. For example, the thresholds mentioned in the above embodiments can be determined based on the scheduling parameter, and the scheduling parameter is the data demodulation success rate mentioned in the above embodiments.

In a second method, if the scheduling parameter configuration of the base station can not be obtained, the first SINR threshold and the second SINR threshold can be determined based on a scheduling parameter obtained by simulating a communication model between the base station and the UE.

In a third method, if scheduling parameter configuration of the base station can not be obtained, a demodulation success rate of the NB-IoT end can be easily obtained without the help of simulation. Therefore, the first SINR threshold and the second SINR threshold can be determined based on data statistics of successful or failed demodulation performed by the NB-IoT end under each ECL configuration of a current network. In addition, the SINR threshold determined through simulation in the second method can be corrected based on the data statistics of successful or failed demodulation performed by the NB-IoT end under each ECL configuration of the current network. After correction, the first SINR threshold and the second SINR threshold can be updated again through actual measurement. In this embodiment, updating or adjusting the SINR threshold includes updating or adjusting at least one of the first SINR threshold and the second SINR threshold.

Based on the content disclosed in the above embodiments, in this embodiment, the base station can determine a coverage level based on a received NPRACH message. After the UE obtains the NRSRP and the SINR through measurement, the ECL can be determined according to the data transmission method provided in this embodiment. When the UE sends the NPRACH message to the base station through the NPRACH, NPRACH sequences sent by the UE are different for different ECLs. Therefore, the base station receive different NPRACH sequences. Therefore, after receiving the NPRACH message, the base station can obtain an ECL based on an NPRACH sequence. Then, the base station can schedule a resource based on the obtained ECL to realize communication with the UE, for example, send an RAR to the UE based on a quantity of repetitions that corresponds to the ECL.

Based on the content disclosed in the above embodiments, in this embodiment, after the UE reads a system message SIB2 delivered by the base station, the UE can obtain a maximum quantity of access attempts configured by the base station. The maximum quantity of access attempts is a quantity of times that the UE attempts to access the base station based on the preamble and a current coverage level, and can be illustrated as a maximum quantity of times that the base station allows the UE to attempt to access the base station under a certain ECL.

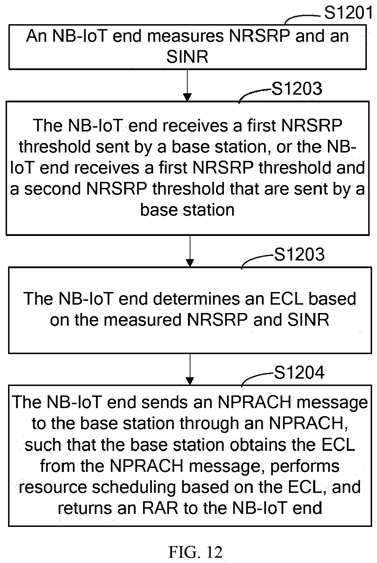

In this embodiment, the UE can measure the NRSRP and the SINR based on the system message delivered by the base station to the UE. After measuring the NRSRP and the SINR, the UE can determine, according to the data transmission method provided in this embodiment of the present disclosure, an ECL for sending the random access preamble to the base station. For example, the UE may send the NPRACH message to the base station based on the quantity of repetitions, corresponding to the ECL, of the random access preamble. After receiving the NPRACH message transmitted through the NPRACH, the base station also obtains the ECL, and can also configure a resource based on the ECL to send the RAR to the UE. Specifically, bit rates and quantities of repetitions when the base station sends the RAR are different for different ECLs. For example, a greater ECL leads to a longer time window for the base station to send the RAR, in other words, a larger quantity of times of repeatedly sending the RAR by the base station. Specifically, a data transmission method for an NB-IoT end in FIG. 12 includes the following steps:
S1201: An NB-IoT end measures NRSRP and an SINR.
S1202: The NB-IoT end receives a first NRSRP threshold sent by a base station, or the NB-IoT end receives a first NRSRP threshold and a second NRSRP threshold that are sent by a base station.
S1203: The NB-IoT end determines an ECL based on the measured NRSRP and SINR.
S1204: The NB-IoT end sends an NPRACH message to the base station through an NPRACH, such that the base station obtains the ECL from the NPRACH message, performs resource scheduling based on the ECL, and returns an RAR to the NB-IoT end.

In this embodiment, step S1201 is the same as or similar to step S401 in the above steps, and details are not described herein again. In step S1203, the NB-IoT end may determine the ECL based on the NRSRP and the SINR, as disclosed in the above embodiments. Specifically, the ECL is determined by comparing the measured NRSRP and SINR with their corresponding thresholds, and details are not described herein again.

Based on the content disclosed in the above embodiments, in this embodiment, the UE may configure transmit power of a random access preamble before sending the random access preamble to the base station. The transmit power of the random access preamble can be understood as transmit power of an NPRACH message. Assuming that the transmit power, of the random access preamble, configured by the NB-IoT end when the ECL is 0 is y, then y = min[Pmax, x- t NRSRP], namely, a minimum value in Pmax and x- t NRSRP, where Pmax is maximum transmit power configured by the base station for the NB-IoT end, and x- t_NRSRP is a value calculated by the UE based on a protocol and the NRSRP measured by the UE. x-t_NRSRP represents a difference between x and the measured NRSRP, t NRSRP represents the NRSRP measured by the NB-IoT end, and x=TargetPower+DELTA _PREAMBLE+(Preamble_TC-1)^{∗}PR_Step+NRS_power_r13-Gain, where TargetPower represents target power configured by the base station for the NB-IoT end, and can also be illsustrated as initial target received power of the random access preamble, and TargetPower can also be expressed as preambleInitialReceiverdTargetPower, DELTA_PREAMBLE represents a power offset of the random access preamble, Preamble _TC represents a quantity of access times of the NB-IoT end, PR_Step represents a power increment step, NRS_power_r13 represents reference signal power of the base station, and Gain represents a gain corresponding to a quantity of repetitions. Specific data is used as an example for description. It is assumed that TargetPower configured by the base station for the UE is -96 dBm, the power offset of the random access preamble is 0, preamble_ TC is 1 for access performed by the UE for the first time, PR_Step is 2 dB, NRS_power_r13 is 29 dBm, the NRSRP measured by the NB-IoT end is -80 dBm, a quantity of repetitions of message RnumRepetitionPerPreambleAttempt-r13 is 8, and Gain is 10*lg8, then x-t_NRSRP can be calculated based on the foregoing specific data, namely, x-t_NRSRP=TargetPower+DELTA _PREAMBLE+(Preamble_TC-1)^{∗}PR_Step+NRS_power_r13-Gain-t_NRSRP =(-96+0+(1-1)*2+29-10*lg8-(-80)) dBm =4 dBm. In other words, the transmit power x- t_NRSRP of sending the random access preamble for the first time may be 4 dBm, where a difference between NRS_ power_ R13 and t_NRSRP can be understood as a path loss.

Generally, the transmit power Pmax configured by the base station is determined. A value of the measured NRSRP can represent a distance between the NB-IoT end and the base station. When the NRSRP measured by the NB-IoT end is greater, it indicates that the NB-IoT end is closer to the base station and the required transmit power x- t NRSRP is smaller. When the ECL is set to 1 or 2, the transmit power of the UE may be set to Pmax.

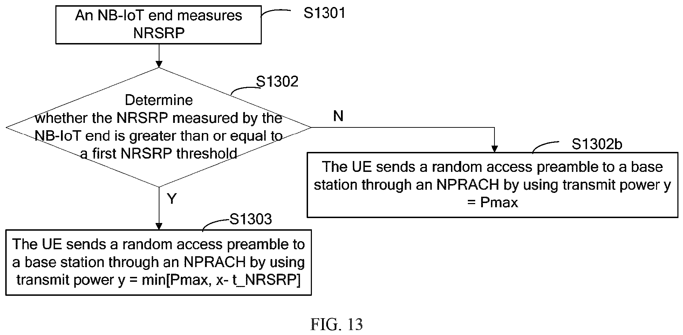

Based on the content disclosed in the above embodiments, in this embodiment, a setting of the transmit power of the random access preamble is related to the NRSRP measured by the NB-IoT end. Reference may be made to a method for determining the transmit power of the random access preamble as shown in FIG. 13. In this embodiment, the transmit power of the random access preamble can be referred to as transmit power of the NPRACH. In this solution, the transmit power of the NPRACH may be determined not according to a conventional solution, namely, the ECL. When UE sends the random access preamble to the base station through the NPRACH, appropriate transmit power of the UE may further be set to reduce power consumption. In the above embodiments, how to select the ECL is determined. If the transmit power of the UE is determined according to the conventional solution, namely, a solution in which the transmit power y of the NB-IoT end is [Pmax, x- t _NRSRP] when the ECL is set to 0, and Pmax when the ECL is set to 1 or 2, power consumption when the transmit power is Pmax may be high because the measured SINR is small and a selected ECL is great. Considering power consumption of the UE, the transmit power of the UE may be adjusted to avoid increasing the power consumption of the UE.

Specifically, the transmit power of the NPRACH message of the UE may be determined based on the NRSRP measured by the UE. If the measured NRSRP is greater than or equal to the first NRSRP threshold, the transmit power y of the random access preamble through the NPRACH is min[Pmax, x-t _NRSRP]. If the measured NRSRP is smaller than the first NRSRP threshold, the transmit power y of the random access preamble through the NPRACH is Pmax. In this embodiment, the transmit power of the NPRACH is determined without depending on a value of the measured SINR. For example, when the measured NRSRP is greater than the first threshold, if the measured SINR is smaller than a first SINR threshold and greater than a second SINR threshold, the ECL of the UE can be determined as 1 based on the content disclosed in the above embodiments. In addition, according to the method for determining the transmit power of the NPRACH in this embodiment of the present disclosure, the transmit power y of the NPRACH message is not Pmax, but min[Pmax, x- t_NRSRP], so as to further reduce the power consumption and avoid increasing the power consumption because large transmit power is set for the NPRACH due to an improvement of the coverage level in this solution. Specifically, Pmax may be equal to 23 dBm. Usually, y is smaller than Pmax, or may be equal to Pmax in some cases, which is determined based on the path loss. The method for determining the transmit power of the NPRACH message in this embodiment can reduce the power consumption, and is used to determine the transmit power of the random access preamble in a process of setting up a connection between the NB-IoT end and the base station. Specifically, as shown in FIG. 13, the method may include the following steps:
S1301: An NB-IoT end measures NRSRP.
S1302: Determine whether the NRSRP measured by the NB-IoT end is greater than or equal to a first NRSRP threshold; and if the NRSRP measured by the NB-IoT end is greater than or equal to the first NRSRP threshold, perform step S1303, or if the NRSRP measured by the NB-IoT end is not greater than or equal to the first NRSRP threshold, perform step S1302b.
S1303: The UE sends a random access preamble to a base station through an NPRACH by using transmit power y = min[Pmax, x- t _NRSRP].
S1302b: The UE sends a random access preamble to a base station through an NPRACH by using transmit power y = Pmax.

In this embodiment, the step of determining an ECL based on the measured NRSRP and SINR in the above embodiments may be performed concurrently with step S1302, or performed before or after step S1302. The NRSRP measured in step S1301 can also be used to determine the ECL, so as to avoid repeatedly comparing the measured NRSRP and the first NRSRP threshold. Sending an NPRACH message to the base station by using the transmit power determined in this embodiment can further reduce power consumption.

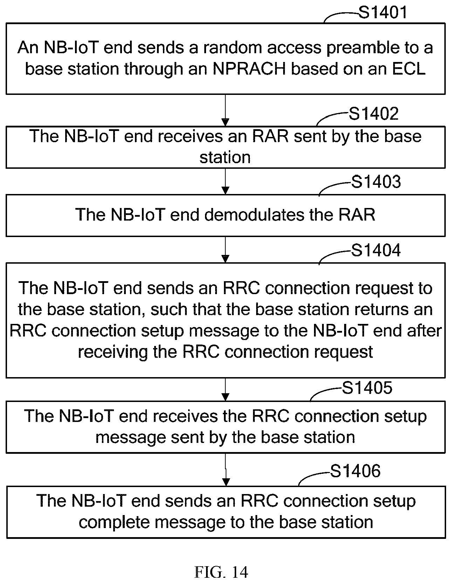

Based on the content disclosed in the above embodiments, in this embodiment, the random access preamble sent by the NB-IoT end to the base station through the NPRACH is used to set up a connection between the NB-IoT end and the base station. Specifically, for the NB-IoT end, as shown in FIG. 14, a data transmission method for an NB-IoT end includes the following steps:
S1401: An NB-IoT end sends a random access preamble to a base station through an NPRACH based on an ECL.
S1402: The NB-IoT end receives an RAR sent by the base station.
S1403: The NB-IoT end demodulates the RAR.
S1404: The NB-IoT end sends an RRC connection request to the base station, such that the base station returns an RRC connect setup message to the NB-IoT end after receiving the RRC connection request.
S1405: The NB-IoT end receives the RRC connect setup message sent by the base station.
S1406: The NB-IoT end sends an RRC connect setup complete message to the base station.

The method provided in this embodiment can realize, with low power consumption, a fast connection between the UE and the base station. For step S1401, the UE can determine the ECL based on the content disclosed in the above embodiments, and then sends the random access preamble to the base station based on the ECL to enable the UE to access the base station. Before sending the random access preamble, the UE may further determine transmit power of the random access preamble and a maximum quantity of attempts that corresponds to the ECL. For step S1402, after receiving the random access preamble sent by the UE, the base station returns the RAR to the UE. After receiving the RAR, the UE demodulates the RAR. After successfully demodulating the RAR, the UE sends the RRC connection request (RRConnectionRequest) to the base station. After receiving the RRC connection request, the base station returns the RRC connect setup (RRConnectSetup) message to the UE. After receiving the RRC connect setup message sent by the base station, the UE returns the RRC connect setup complete (RRConnectSetupComplete) message to the base station. So far, the connection between the UE and the base station is set up.

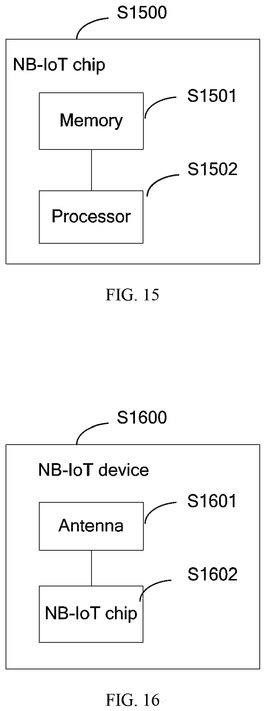

An embodiment of the present disclosure further provides an NB-IoT chip. As shown in FIG. 15, the NB-IoT chip 1500 includes a memory 1501 and a processor 1502.

The memory 1501 is coupled to the processor 1502.

The memory 1501 is configured to store a program instruction.

The processor 1502 is configured to call the program instruction stored in the memory, such that the chip executes the data transmission method for an NB-IoT end in any one of the above embodiments. For an implementation process and beneficial effects of the NB-IoT chip provided in the embodiments of the present disclosure, refer to the above descriptions. Details are not described herein again.

An embodiment of the present disclosure further provides an NB-IoT device 1600. As shown in FIG. 16, the NB-IoT device 1600 includes an antenna 1601 and an NB-IoT chip 1602 as described in the above embodiments. The antenna 1601 is connected to the NB-IoT chip 1602 to realize data transmission between the NB-IoT device and a base station. In this embodiment, the UE may be an NB-IoT device, for example, a mobile phone, an ammeter, or a water meter. For an implementation process and beneficial effects of the NB-IoT device provided in the embodiments of the present disclosure, refer to the above descriptions. Details are not described herein again.

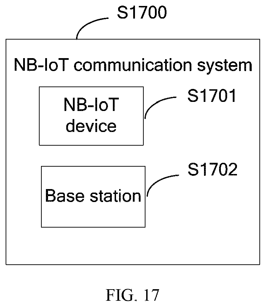

An embodiment of the present disclosure further provides an NB-IoT communication system 1700. As shown in FIG. 17, the NB-IoT communication system 1700 includes an NB-IoT device 1701 as described in the above embodiments and a base station 1702. The NB-IoT device is wirelessly connected to the base station to perform data transmission. For an implementation process and beneficial effects of the NB-IoT communication system provided in the embodiments of the present disclosure, refer to the above descriptions. Details are not described herein again.

An embodiment of the present disclosure further provides a computer-readable storage medium storing a computer program, where the computer program is executed by a processor to implement the data transmission method for an NB-IoT end in any one of the above embodiments. For an implementation process and beneficial effects of the computer-readable storage medium provided in the embodiments of the present disclosure, refer to the above descriptions. Details are not described herein again.

It should be noted that the above method embodiments of the present disclosure may be applied to a processor or implemented by a processor. The processor may be an integrated circuit (IC) chip capable of signal processing. During the implementation, the steps of each method may be performed by using an integrated logic circuit of hardware in a processor or by using instructions in a form of software. The processor may be a general-purpose processor, a digital signal processor (DSP), an application-specific integrated circuit (ASIC), a field-programmable gate array (FPGA), another programmable logic device, a discrete gate or transistor logic device, or a discrete hardware component. The processor can implement or execute the methods, steps and logical block diagrams disclosed in the embodiments of the present disclosure. The general-purpose processor may be a microprocessor, any conventional processor, or the like. The steps of the methods disclosed with reference to the embodiments of the present disclosure may be directly executed by a hardware decoding processor, or executed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps of the foregoing methods in combination with hardware in the processor.

It can be understood that the memory in the embodiments of the present disclosure may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. Through illustrative rather than restrictive description, RAMs of many forms are available, for example, a static RAM (SRAM), a dynamic RAM (DRAM), a synchronous DRAM (SDRAM), a double data rate SDRAM (DDR SDRAM), an enhanced SDRAM (ESDRAM), synchlink DRAM (SLDRAM), and a direct rambus RAM (DRRAM). It should be noted that the memory involved in the systems and methods described in this specification is intended to include, but is not limited to, these memories and a memory of any other suitable type.

It should be understood that in the embodiments of the present disclosure, "B corresponding to A" means that B is associated with A, and B can be determined based on A. It should also be understood that determining B based on A means that B not only can be determined only based on A, and but also can be determined based on A and/or other information.

In addition, the term "and/or" used in this specification merely describes an association relationship between associated objects, and indicates that three types of relationships may exist. For example, A and/or B may indicate that A exists alone, both A and B exist, or B exists alone. In addition, the character "/" in this specification generally indicates that the associated objects are in an "or" relationship.

Those of ordinary skill in the art may be aware that units and algorithm steps in examples described with reference to the embodiments disclosed in this specification can be implemented by electronic hardware or a combination of computer software and electronic hardware. Whether these functions are implemented by using hardware or software depends on specific applications and design constraints of the technical solutions. A person skilled in the art may use different methods to implement the described functions for each specific application, but such implementation should not be considered to be beyond the scope of the present disclosure.

A person skilled in the art can clearly understand that, for convenience and brevity of description, reference may be made to corresponding processes in the foregoing method embodiments for specific working processes of the foregoing systems, apparatuses, and units. Details are not described herein again.

In several embodiments provided in the present disclosure, it should be understood that the disclosed systems, apparatuses, and methods may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate. Parts shown as units may or may not be physical units, which may be located in one position, or may be distributed on a plurality of network units. Some or all of the units may be selected according to actual requirements to achieve the objectives of the solutions in the embodiments.

In addition, functional units in the embodiments of the present disclosure may be integrated into one processing unit, or each of the units may exist alone physically, or two or more units are integrated into one unit.

If implemented in a form of a software functional unit and sold or used as a stand-alone product, functions may be stored in a computer-readable storage medium. Based on this understanding, the technical solution of the present disclosure essentially, or a part contributing to the prior art, or some of the technical solutions may be embodied in a form of a software product. The computer software product is stored on a storage medium, and includes several instructions to enable a computer device (which may be a personal computer, a server, a network device, or the like) to execute all or some steps of the methods according to the embodiments of the present disclosure. The foregoing storage medium includes any medium that can store program code, such as a USB flash drive, a removable hard disk, a read-only memory (ROM), a random access memory (RAM), a magnetic disk, or an optical disc.

The above merely describes specific implementations of the present disclosure, but the protection scope of the present disclosure is not limited thereto. Any person skilled in the art can easily conceive modifications or replacements within the technical scope of the present disclosure. Therefore, the protection scope of the present disclosure is defined by the claims.

## Claims

1. A data transmission method for a Narrowband Internet of Things, NB-IoT, end, comprising:
when narrowband reference signal receiving power, NRSRP, measured by the NB-IoT end is greater than or equal to a first NRSRP threshold, and a signal to interference plus noise ratio, SINR, measured by the NB-IoT end is smaller than or equal to a first SINR threshold, sending, by the NB-IoT end, a random access preamble to a base station through a narrowband physical random access channel NPRACH based on a configuration with an enhance coverage level, , ECL, , being 1 or 2, to set up a connection between the NB-IoT end and the base station, wherein a second SINR threshold is smaller than the first SINR threshold;
when the NRSRP measured by the NB-IoT end is greater than or equal to the first NRSRP threshold, and the SINR measured by the NB-IoT end is smaller than or equal to the first SINR threshold and greater than the second SINR threshold, sending, by the NB-IoT end, the random access preamble to the base station through the NPRACH based on the configuration with the ECL being 1; and/or
when the NRSRP measured by the NB-IoT end is greater than or equal to the first NRSRP threshold, and the SINR measured by the NB-IoT end is smaller than the second SINR threshold, sending, by the NB-IoT end, the random access preamble to the base station through the NPRACH based on the configuration with the ECL being 2.

2. The data transmission method for an NB-IoT end according to claim 1, further comprising: when the NRSRP measured by the NB-IoT end is greater than or equal to the first NRSRP threshold, and the SINR measured by the NB-IoT end is greater than the first SINR threshold, sending, by the NB-IoT end, the random access preamble to the base station through the NPRACH based on a configuration with the ECL being 0.

3. The data transmission method for an NB-IoT end according to claim 1 or 2, further comprising: when the NRSRP measured by the NB-IoT end is smaller than the first NRSRP threshold, sending, by the NB-IoT end, the random access preamble to the base station through the NPRACH based on the configuration with the ECL being 1 or 2.

4. The data transmission method for an NB-IoT end according to claim 3, further comprising:
when the NRSRP measured by the NB-IoT end is smaller than the first NRSRP threshold, and the SINR measured by the NB-IoT end is smaller than or equal to the second SINR threshold, sending, by the NB-IoT end, the random access preamble to the base station through the NPRACH based on the configuration with the ECL being 2; and/or
when the NRSRP measured by the NB-IoT end is smaller than the first NRSRP threshold, and the SINR measured by the NB-IoT end is greater than the second SINR threshold, sending, by the NB-IoT end, the random access preamble to the base station through the NPRACH based on the configuration with the ECL being 1.

5. The data transmission method for an NB-IoT end according to claim 3, wherein the first NRSRP threshold is greater than a second NRSRP threshold; and the data transmission method for an NB-IoT end further comprises:
when the NRSRP measured by the NB-IoT end is smaller than the second NRSRP threshold, sending, by the NB-IoT end, the random access preamble to the base station through the NPRACH based on the configuration with the ECL being 2;
when the NRSRP measured by the NB-IoT end is smaller than the first NRSRP threshold and greater than or equal to the second NRSRP threshold, and the SINR measured by the NB-IoT end is smaller than or equal to the second SINR threshold, sending, by the NB-IoT end, the random access preamble to the base station through the NPRACH based on the configuration with the ECL being 2; and/or
when the NRSRP measured by the NB-IoT end is smaller than the first NRSRP threshold and greater than or equal to the second NRSRP threshold, and the SINR measured by the NB-IoT end is greater than the second SINR threshold, sending, by the NB-IoT end, the random access preamble to the base station through the NPRACH based on the configuration with the ECL being 1; and
receiving, by the NB-IoT end, the second NRSRP threshold sent by the base station, such that the NB-IoT end compares the measured SINR with the second SINR threshold and compares the measured NRSRP with the first NRSRP threshold and the second NRSRP threshold, wherein the second NRSRP threshold is -120 dBm.

6. The data transmission method for an NB-IoT end according to claim 1 or 2, further comprising: derterming, based on a data demodulation success rate of the NB-IoT end, the first SINR threshold and/or the second SINR threshold, and when the data demodulation success rate of the NB-IoT end under a configuration with the ECL being 0 or 1 is smaller than a preset success rate, the second SINR threshold increases, and/or the first SINR threshold increases, wherein the preset success rate is 70%.

7. The data transmission method for an NB-IoT end according to claim 1 or 2, wherein when a data demodulation success rate of the NB-IoT end under a configuration with the ECL being 1 is greater than or equal to 70%, the measured SINR is the second SINR threshold; and the second SINR threshold is -4 dB; and when the data demodulation success rate of the NB-IoT end under a configuration with the ECL being 0 is greater than or equal to 70%, the measured SINR is the first SINR threshold; and the first SINR threshold is 5 dB.

8. The data transmission method for an NB-IoT end according to claim 1 or 2, further comprising: receiving, by the NB-IoT end, a system message broadcast by the base station, to measure the NRSRP and the SINR.

9. The data transmission method for an NB-IoT end according to claim 1 or 2, further comprising: receiving, by the NB-IoT end, the first NRSRP threshold sent by the base station, such that the NB-IoT end compares the measured SINR with the first SINR threshold and compares the measured NRSRP and the first NRSRP threshold, wherein the first NRSRP threshold is -110 dBm.

10. The data transmission method for an NB-IoT end according to claim 1 or 2, further comprising: sending, by the NB-IoT end, the random access preamble to the base station through the NPRACH, such that the base station performs scheduling based on radio resource configuration information corresponding to the ECL to send a random access response, RAR, to the NB-IoT end, wherein the radio resource configuration information comprises at least one of a quantity of repetitions of the random access preamble, a maximum quantity of attempts made by the NB-IoT end to access the base station, a time domain resource of the NPRACH, and a frequency domain resource of the NPRACH.

11. The data transmission method for an NB-IoT end according to claim 1 or 2, wherein after the sending, by the NB-IoT end, the random access preamble to the base station through the NPRACH, the data transmission method for an NB-IoT end further comprises:
receiving, by the NB-IoT end, a random access response, RAR, sent by the base station;
demodulating, by the NB-IoT end, the RAR;
sending, by the NB-IoT end, a radio resource control, RRC, connection request to the base station, such that the base station returns an RRC connect setup message to the NB-IoT end after receiving the RRC connection request;
receiving, by the NB-IoT end, the RRC connect setup message sent by the base station; and
sending, by the NB-IoT end, an RRC connect setup complete message to the base station.

12. The data transmission method for an NB-IoT end according to claim 1 or 2, wherein the sending, by the NB-IoT end, the random access preamble to the base station through the NPRACH comprises:
sending, by the NB-IoT end, the random access preamble to the base station through the NPRACH based on the ECL, wherein a greater ECL leads to a larger quantity of repetitions of the random access preamble corresponding to the ECL;
wherein when setting a connection between the NB-IoT end and the base station through the NPRACH based on the configuration with the ECL being 0, the quantity of repetitions of the random access preamble is 2; or
when setting a connection between the NB-IoT end and the base station through the NPRACH based on the configuration with the ECL being 1, the quantity of repetitions of the random access preamble is 8; or
when setting a connection between the NB-IoT end and the base station through the NPRACH based on the configuration with the ECL being 2, the quantity of repetitions of the random access preamble is 16.

13. The data transmission method for an NB-IoT end according to claim 1 or 2, further comprising: when the NRSRP measured by the NB-IoT end is greater than or equal to the first NRSRP threshold, sending, by the NB-IoT end, the random access preamble to the base station by using a minimum value in Pmax and (x-t NRSRP) as transmit power; and/or
when the NRSRP measured by the NB-IoT end is smaller than the first NRSRP threshold, sending, by the NB-IoT end, the random access preamble to the base station by using Pmax as transmit power,
wherein Pmax represents maximum transmit power configured by the base station for the NB-IoT end, x=TargetPower+DELTA PREAMBLE +(Preamble TC-1)*PR Step+NRS power r13-Gain, where TargetPower represents target power configured by the base station for the NB-IoT end, DELTA PREAMBLE represents a power offset of the random access preamble, Preamble TC represents a quantity of access times of the NB-IoT end, PR_Step represents a power increment step, NRS power r13 represents reference signal power of the base station, Gain represents a gain corresponding to a quantity of repetitions of the random access preamble, and t NRSRP represents the NRSRP measured by the NB-IoT end; and Pmax is 23 dBm.

14. An NB-IoT chip, comprising:
a memory storing program instructions; and
a processor coupled to the memory and configured to call the program instructions stored in the memory, and adapted to perform the data transmission method for an NB-IoT end according to any one of claims 1 to 13.

15. An NB-IoT device, comprising an antenna and the NB-IoT chip according to claim 14, wherein the antenna is connected to the NB-IoT chip to realize data transmission between the NB-IoT device and the base station

## Patentansprüche

1. Datenübertragungsverfahren für ein Schmalband-Internet-der-Dinge-, NB-IoT, Ende, umfassend:
wenn eine von dem NB-IoT-Ende gemessene Schmalbandreferenzsignalempfangsleistung, NRSRP, größer als oder gleich einer ersten NRSRP-Schwelle ist und ein von dem NB-IoT-Ende gemessenes Signal-zu-Interferenz-plus-Rauschen-Verhältnis, SINR, kleiner als oder gleich einer ersten SINR-Schwelle ist, Senden, durch das NB-IoT-Ende, einer Direktzugriffspräambel an eine Basisstation durch einen physikalischen Schmalbanddirektzugriffskanal, NPRACH, basierend auf einer Konfiguration mit einem Abdeckungsverbesserungslevel, ECL, von 1 oder 2, um eine Verbindung zwischen dem NB-IoT-Ende und der Basisstation einzurichten, wobei eine zweite SINR-Schwelle kleiner als die erste SINR-Schwelle ist;
wenn die von dem NB-IoT-Ende gemessene NRSRP größer als oder gleich der ersten NRSRP-Schwelle ist und das von dem NB-IoT-Ende gemessene SINR kleiner als oder gleich der ersten SINR-Schwelle und größer als die zweite SINR-Schwelle ist, Senden, durch das NB-IoT-Ende, der Direktzugriffspräambel an die Basisstation durch den NPRACH, basierend auf der Konfiguration mit dem ECL von 1; und/oder
wenn die von dem NB-IoT-Ende gemessene NRSRP größer als oder gleich der ersten NRSRP-Schwelle ist und das von dem NB-IoT-Ende gemessene SINR kleiner als die zweite SINR-Schwelle ist, Senden, durch das NB-IoT-Ende, der Direktzugriffspräambel an die Basisstation durch den NPRACH, basierend auf der Konfiguration mit dem ECL von 2.

2. Datenübertragungsverfahren für ein NB-IoT-Ende nach Anspruch 1, weiter umfassend: wenn die von dem NB-IoT-Ende gemessene NRSRP größer als oder gleich der ersten NRSRP-Schwelle ist und das von dem NB-IoT-Ende gemessene SIRN größer als die erste SINR-Schwelle ist, Senden, durch das NB-IoT-Ende, der Direktzugriffspräambel an die Basisstation durch den NPRACH, basierend auf einer Konfiguration mit dem ECL von 0.

3. Datenübertragungsverfahren für ein NB-IoT-Ende nach Anspruch 1 oder 2, weiter umfassend: wenn die von dem NB-IoT-Ende gemessene NRSRP kleiner als die erste NRSRP-Schwelle ist, Senden, durch das NB-IoT-Ende, der Direktzugriffspräambel an die Basisstation durch den NPRACH, basierend auf der Konfiguration mit dem ECL von 1 oder 2.

4. Datenübertragungsverfahren für ein NB-IoT-Ende nach Anspruch 3, weiter umfassend:
wenn die von dem NB-IoT-Ende gemessene NRSRP kleiner als die erste NRSRP-Schwelle ist und das von dem NB-IoT-Ende gemessene SINR kleiner als oder gleich der zweiten SINR-Schwelle ist, Senden, durch das NB-IoT-Ende, der Direktzugriffspräambel an die Basisstation durch den NPRACH, basierend auf der Konfiguration mit dem ECL von 2; und/oder
wenn die von dem NB-IoT-Ende gemessene NRSRP kleiner als die erste NRSRP-Schwelle ist und das von dem NB-IoT-Ende gemessene SINR größer als die zweite SINR-Schwelle ist, Senden, durch das NB-IoT-Ende, der Direktzugriffspräambel an die Basisstation durch den NPRACH, basierend auf der Konfiguration mit dem ECL von 1.

5. Datenübertragungsverfahren für ein NB-IoT-Ende nach Anspruch 3, wobei die erste NRSRP-Schwelle größer als eine zweite NRSRP-Schwelle ist; und das Datenübertragungsverfahren für ein NB-IoT-Ende weiter umfasst:
wenn die von dem NB-IoT-Ende gemessene NRSRP kleiner als die zweite NRSRP-Schwelle ist, Senden, durch das NB-IoT-Ende, der Direktzugriffspräambel an die Basisstation durch den NPRACH, basierend auf der Konfiguration mit dem ECL von 2;
wenn die von dem NB-IoT-Ende gemessene NRSRP kleiner als die erste NRSRP-Schwelle und größer als oder gleich der zweiten NRSRP-Schwelle ist, und das von dem NB-IoT-Ende gemessene SINR kleiner als oder gleich der zweiten SINR-Schwelle ist, Senden, durch das NB-IoT-Ende, der Direktzugriffspräambel an die Basisstation durch den NPRACH, basierend auf der Konfiguration mit dem ECL von 2; und/oder
wenn die von dem NB-IoT-Ende gemessene NRSRP kleiner als die erste NRSRP-Schwelle und größer als oder gleich der zweiten NRSRP-Schwelle ist, und das von dem NB-IoT-Ende gemessene SINR größer als die zweite SINR-Schwelle ist, Senden, durch das NB-IoT-Ende, der Direktzugriffspräambel an die Basisstation durch den NPRACH, basierend auf der Konfiguration mit dem ECL von 1; und
Empfangen, durch das NB-IoT-Ende, der zweiten NRSRP-Schwelle, die von der Basisstation gesendet wird, so dass das NB-IoT-Ende das gemessene SINR mit der zweiten SINR-Schwelle vergleicht und die gemessene NRSRP mit der ersten NRSRP-Schwelle und der zweiten NRSRP-Schwelle vergleicht, wobei die zweite NRSRP-Schwelle -120 dBm ist.

6. Datenübertragungsverfahren für ein NB-IoT-Ende nach Anspruch 1 oder 2, weiter umfassend:
Bestimmen, basierend auf einer Datendemodulationserfolgsrate des NB-IoT-Endes, der ersten SINR-Schwelle und/oder der zweiten SINR-Schwelle, und wenn die Datendemodulationserfolgsrate des NB-IoT-Endes unter einer Konfiguration mit dem ECL von 0 oder 1 kleiner als eine voreingestellte Erfolgsrate ist, die zweite SINR-Schwelle steigt und/oder die erste SINR-Schwelle steigt, wobei die voreingestellte Erfolgsrate 70% ist.

7. Datenübertragungsverfahren für ein NB-IoT-Ende nach Anspruch 1 oder 2, wobei, wenn eine Datendemodulationserfolgsrate des NB-IoT-Endes unter einer Konfiguration mit dem ECL von 1 größer als oder gleich 70% ist, das gemessene SINR die zweite SINR-Schwelle ist; und die zweite SINR-Schwelle -4 dB ist; und
wenn die Datendemodulationserfolgsrate des NB-IoT-Endes unter einer Konfiguration mit dem ECL von 0 größer als oder gleich 70% ist, das gemessene SINR die erste SINR-Schwelle ist; und die erste SINR-Schwelle 5 dB ist.

8. Datenübertragungsverfahren für ein NB-IoT-Ende nach Anspruch 1 oder 2, weiter umfassend: Empfangen, durch das NB-IoT-Ende, einer Systemnachricht, die von der Basisstation ausgesendet wird, um die NRSRP und das SINR zu messen.

9. Datenübertragungsverfahren für ein NB-IoT-Ende nach Anspruch 1 oder 2, weiter umfassend: Empfangen, durch das NB-IoT-Ende, der ersten NRSRP-Schwelle, die von der Basisstation gesendet wird, so dass das NB-IoT-Ende das gemessene SINR mit der ersten SINR-Schwelle vergleicht und die gemessene NRSRP und die erste NRSRP-Schwelle vergleicht, wobei die erste NRSRP-Schwelle -110 dBm ist.

10. Datenübertragungsverfahren für ein NB-IoT-Ende nach Anspruch 1 oder 2, weiter umfassend:
Senden, durch das NB-IoT-Ende, der Direktzugriffspräambel an die Basisstation durch den NPRACH, so dass die Basisstation Planung basierend auf den Funkressourcenkonfigurationsinformationen entsprechend dem ECL durchführt, eine Direktzugriffsantwort, RAR, an das NB-IoT-Ende zu senden, wobei die Funkressourcenkonfigurationsinformationen zumindest eines von einer Anzahl von Wiederholungen der Direktzugriffspräambel, einer maximalen Anzahl von dem NB-IoT-Ende angestellten Versuchen, auf die Basisstation zuzugreifen, einer Zeitdomänenressource des NPRACH und einer Frequenzdomänenressource des NPRACH umfassen.

11. Datenübertragungsverfahren für ein NB-IoT-Ende nach Anspruch 1 oder 2, wobei nach dem Senden, durch das NB-IoT-Ende, der Direktzugriffspräambel an die Basisstation durch den NPRACH, das Datenübertragungsverfahren für ein NB-IoT-Ende weiter umfasst:
Empfangen, durch das NB-IoT-Ende, einer Direktzugriffsantwort, RAR, die von der Basisstation gesendet wird;
Demodulieren, durch das NB-IoT-Ende, der RAR;
Senden, durch das NB-IoT-Ende, einer Funkressourcensteuerung-, RRC, Verbindungsanfrage an die Basisstation, so dass die Basisstation eine RRC-Verbindungseinrichtungsnachricht an das NB-IoT-Ende zurückschickt, nachdem sie die RRC-Verbindungsanfrage empfangen hat;
Empfangen, durch das NB-IoT-Ende, der RRC-Verbindungseinrichtungsnachricht, die von der Basisstation gesendet wird; und
Senden, durch das NB-IoT-Ende, einer RRC-Verbindungseinrichtungsabschlussnachricht an die Basisstation.

12. Datenübertragungsverfahren für ein NB-IoT-Ende nach Anspruch 1 oder 2, wobei das Senden, durch das NB-IoT-Ende, der Direktzugriffspräambel an die Basisstation durch den NPRACH umfasst:
Senden, durch das NB-IoT-Ende, der Direktzugriffspräambel an die Basisstation durch den NPRACH, basierend auf dem ECL, wobei ein höheres ECL zu einer größeren Anzahl von Wiederholungen der Direktzugriffspräambel entsprechend dem ECL führt;
wobei, wenn eine Verbindung zwischen dem NB-IoT-Ende und der Basisstation durch den NPRACH basierend auf der Konfiguration mit dem ECL von 0 eingerichtet wird, die Anzahl von Wiederholungen der Direktzugriffspräambel 2 ist; oder
wenn eine Verbindung zwischen dem NB-IoT-Ende und der Basisstation durch den NPRACH basierend auf der Konfiguration mit dem ECL von 1 eingerichtet wird, die Anzahl von Wiederholungen der Direktzugriffspräambel 8 ist; oder
wenn eine Verbinndung zwischen dem NB-IoT-Ende und der Basisstation durch den NPRACH basierend auf der Konfiguration mit dem ECL von 2 eingerichtet ist, die Anzahl von Wiederholungen der Direktzugriffspräambel 16 ist.

13. Datenübertragungsverfahren für ein NB-IoT-Ende nach Anspruch 1 oder 2, weiter umfassend:
wenn die von dem NB-IoT-Ende gemessene NRSRP größer als oder gleich der ersten NRSRP-Schwelle ist, Senden, durch das NB-IoT-Ende, der Direktzugriffspräambel an die Basisstation unter Verwendung eines minimalen Werts in Pmax und (x-T_NRSRP) als Übertragungsleistung; und/oder
wenn die von dem NB-IoT-Ende gemessene NRSRP kleiner als die erste NRSRP-Schwelle ist, Senden, durch das NB-IoT-Ende, der Direktzugriffspräambel an die Basisstation unter Verwendung von Pmax als Übertragungsleistung,
wobei Pmax eine maximale Übertragungsleistung bezeichnet, die von der Basisstation für das NB-IoT-Ende konfiguriert ist, x=TargetPower+DELTA_PREAMBLE+(Preamble_TC-1)*PR Step+NRS power r13-Gain, wo TargetPower eine Zielleistung bezeichnet, die von der Basisstation für das NB-IoT-Ende konfiguriert ist, DELTA PREAMBLE ein Leistungsoffset der Direktzugriffspräambel bezeichnet, Preamble TC eine Anzahl von Zugriffszeiten des NB-IoT-Ende bezeichnet, PR_Step einen Leistungszuwachs bezeichnet, NRS_power_r13 Referenzsignalleistung der Basisstation bezeichnet, Gain eine Verstärkung entsprechend einer Anzahl von Wiederholungen der Direktzugriffspräambel bezeichnet und t NRSRP die von dem NB-IoT-Ende gemessene NRSRP bezeichnet; und Pmax 23 dBm ist.

14. NB-IoT-Chip, umfassend:
einen Speicher, der Programmanweisungen speichert; und
einen Prozessor, der mit dem Speicher gekoppelt ist und konfiguriert ist, die in dem Speicher gespeicherten Programmanweisungen aufzurufen, und der angepasst ist, das Datenübertragungsverfahren für ein NB-IoT-Ende nach einem der Ansprüche 1 bis 13 durchzuführen.

15. NB-IoT-Vorrichtung, die eine Antenne und den NB-IoT-Chip nach Anspruch 14 umfasst, wobei die Antenne mit dem NB-IoT-Chip verbunden ist, um Datenübertragung zwischen der NB-IoT-Vorrichtung und der Basisstation durchzuführen.

## Revendications

1. Procédé de transmission de données pour une extrémité d'Internet des objets à bande étroite, NB-IoT, comprenant de :
lorsque la puissance de réception de signal de référence à bande étroite, NRSRP, mesurée par l'extrémité NB-IoT est supérieure ou égale à une première NRSRP de seuil et un rapport signal sur interférence plus bruit mesuré par l'extrémité NB-IoT est inférieur ou égal à un premier SINR de seuil, envoyer, par l'extrémité NB-IoT, un préambule d'accès aléatoire à une station de base via un canal d'accès aléatoire physique à bande étroite NPRACH sur la base d'une configuration avec un niveau de couverture amélioré, ECL, étant 1 ou 2, pour établir une connexion entre l'extrémité NB-IoT et la station de base, un deuxième SINR de seuil étant inférieur au premier SINR de seuil, lorsque le NRSRP mesuré par l'extrémité NB-IoT est supérieur ou égal au premier NRSRP de seuil, et le SINR mesuré par l'extrémité NB-IoT est inférieur ou égal au premier SINR de seuil et supérieur au deuxième SINR de seuil, envoyer, par l'extrémité NB-IoT, le préambule d'accès aléatoire à la station de base via le NPRACH en fonction de la configuration avec l'ECL étant 1 ; et/ou
lorsque le NRSRP mesuré par l'extrémité NB-IoT est supérieur ou égal au premier NRSRP de seuil, et le SINR mesuré par l'extrémité NB-IoT est inférieur au deuxième SINR de seuil, émettre, par l'extrémité NB-IoT, le préambule d'accès aléatoire à la station de base via le NPRACH sur la base de la configuration avec l'ECL étant 2.

2. Procédé de transmission de données pour une extrémité NB-IoT selon la revendication 1, comprenant en outre de : lorsque le NRSRP mesuré par l'extrémité NB-IoT est supérieur ou égal au premier NRSRP de seuil, et le SINR mesuré par l'extrémité NB-IoT est supérieur au premier SINR de seuil, envoyer, par l'extrémité NB-IoT, le préambule d'accès aléatoire à la station de base via le NPRACH sur la base d'une configuration avec l'ECL étant 0.

3. Procédé de transmission de données pour une extrémité NB-IoT selon la revendication 1 ou 2, comprenant en outre : lorsque le NRSRP mesuré par l'extrémité NB-IoT est inférieur au premier NRSRP de seuil, envoyer, par l'extrémité NB-IoT, le préambule d'accès aléatoire à la station de base via le NPRACH en fonction de la configuration avec l'ECL étant 1 ou 2.

4. Procédé de transmission de données pour une extrémité NB-IoT selon la revendication 3, comprenant en outre :
lorsque le NRSRP mesuré par l'extrémité NB-IoT est inférieur au premier NRSRP de seuil, et le SINR mesuré par l'extrémité NB-IoT est inférieur ou égal au deuxième SINR de seuil, envoyer, par l'extrémité NB-IoT, le préambule d'accès aléatoire à la station de base via le NPRACH sur la base de la configuration avec l'ECL étant 2 ; et/ou
lorsque le NRSRP mesuré par l'extrémité NB-IoT est inférieur au premier NRSRP de seuil, et le SINR mesuré par l'extrémité NB-IoT est supérieur au deuxième SINR de seuil, envoyer, par l'extrémité NB-IoT, du préambule d'accès aléatoire à la station de base via le NPRACH en fonction de la configuration avec l'ECL étant 1.

5. Procédé de transmission de données pour une extrémité NB-IoT selon la revendication 3, **caractérisé en ce que** le premier NRSRP de seuil est supérieur à un deuxième NRSRP de seuil ; et le procédé de transmission de données pour une extrémité NB-IoT comprend en outre :
lorsque le NRSRP mesuré par l'extrémité NB-IoT est inférieur au deuxième NRSRP de seuil, envoyer, par l'extrémité NB-IoT, le préambule d'accès aléatoire à la station de base via le NPRACH en fonction de la configuration avec l'ECL étant 2 ;
lorsque le NRSRP mesuré par l'extrémité NB-IoT est inférieur au premier NRSRP de seuil et supérieur ou égal au deuxième NRSRP de seuil, et le SINR mesuré par l'extrémité NB-IoT est inférieur ou égal au deuxième SINR de seuil, envoyer, par l'extrémité NB-IoT, le préambule d'accès aléatoire à la station de base via le NPRACH basé sur la configuration avec l'ECL étant 2 ; et/ou
lorsque le NRSRP mesuré par l'extrémité NB-IoT est inférieur au premier NRSRP de seuil et supérieur ou égal au deuxième NRSRP de seuil, et le SINR mesuré par l'extrémité NB-IoT est supérieur au deuxième SINR de seuil, envoyer, par l'extrémité NB-IoT, le préambule d'accès aléatoire à la station de base via le NPRACH basé sur la configuration avec l'ECL étant 1 ; et
recevoir, par l'extrémité NB-IoT, le deuxième NRSRP de seuil envoyé par la station de base, de sorte que l'extrémité NB-IoT compare le SINR mesuré au deuxième SINR de seuil et compare le NRSRP mesuré au premier NRSRP de seuil et au deuxième NRSRP seuil, dans lequel le deuxième NRSRP de seuil est de -120 dBm.

6. Procédé de transmission de données pour une extrémité NB-IoT selon la revendication 1 ou 2, comprenant en outre de :
déterminer, sur la base d'un taux de réussite de démodulation de données de l'extrémité NB-IoT, du premier SINR de seuil et/ou du deuxième SINR de seuil, et lorsque le taux de réussite de démodulation de données de l'extrémité NB-IoT dans une configuration avec l'ECL étant 0 ou 1 est inférieur à un taux de réussite préréglé, le deuxième SINR de seuil augmente, et/ou le premier SINR de seuil augmente, dans lequel le taux de réussite préréglé est de 70 %.

7. Procédé de transmission de données pour une extrémité NB-IoT selon la revendication 1 ou 2, dans lequel lorsqu'un taux de réussite de démodulation de données de l'extrémité NB-IoT sous une configuration avec l'ECL étant 1 est supérieur ou égal à 70 %, le SINR mesuré est le deuxième seuil de SINR ; et
le deuxième SINR de seuil est -4 dB ; et lorsque le taux de succès de démodulation de données de l'extrémité NB-IoT dans une configuration avec l'ECL étant de 0 est supérieur ou égal à 70 %, le SINR mesuré est le premier seuil de SINR ; et le premier SINR de seuil est de 5 dB.

8. Procédé de transmission de données pour une extrémité NB-IoT selon la revendication 1 ou 2, comprenant en outre de : recevoir, par l'extrémité NB-IoT, un message de système diffusé par la station de base, pour mesurer le NRSRP et le SINR.

9. Procédé de transmission de données pour une extrémité NB-10T selon la revendication 1 ou 2, comprenant en outre de : recevoir, par l'extrémité NB-IoT, le premier NRSRP de seuil envoyé par la station de base, de sorte que l'extrémité NB-IoT compare le SINR mesuré avec le premier seuil de SINR et compare le NRSRP mesuré et le premier seuil de NRSRP, le premier seuil de NRSRP étant de -110 dBm.

10. Procédé de transmission de données pour une extrémité NB-IoT selon la revendication 1 ou 2, comprenant en outre de :
envoyer, par l'extrémité NB-IoT, le préambule d'accès aléatoire à la station de base via le NPRACH, de telle sorte que la station de base effectue une programmation sur la base des informations de configuration de ressource radio correspondant à l'ECL pour envoyer une réponse d'accès aléatoire, RAR, à l'extrémité NB-IoT, dans lequel les informations de configuration de ressource radio comprennent au moins une d'une quantité de répétitions du préambule d'accès aléatoire, une quantité maximale de tentatives effectuées par l'extrémité NB-IoT pour accéder à la station de base, une ressource de domaine temporel du NPRACH, et une ressource de domaine fréquentiel du NPRACH.

11. Procédé de transmission de données pour une extrémité NB-IoT selon la revendication 1 ou 2, dans lequel après l'envoi, par l'extrémité NB-IoT, du préambule d'accès aléatoire à la station de base via le NPRACH, le procédé de transmission de données pour un NB-IoT comprend en outre de :
recevoir, par l'extrémité NB-IoT, une réponse d'accès aléatoire, RAR, envoyée par la station de base ;
démoduler, par l'extrémité NB-IoT, le RAR ;
envoyer, par l'extrémité NB-IoT, une demande de connexion de commande de ressource radio, RRC, à la station de base, de sorte que la station de base renvoie un message d'établissement de connexion RRC à l'extrémité NB-IoT après avoir reçu la demande de connexion RRC ;
recevoir, par l'extrémité NB-IoT, le message d'établissement de connexion RRC envoyé par la station de base,
et envoyer, par l'extrémité NB-IoT, un message de fin d'établissement de connexion RRC à la station de base.

12. Procédé de transmission de données pour une extrémité NB-IoT selon la revendication 1 ou 2, dans lequel l'envoi, par l'extrémité NB-IoT, du préambule d'accès aléatoire à la station de base via le NPRACH comprend de :
envoyer, par l'extrémité NB-IoT, le préambule d'accès aléatoire à la station de base via le NPRACH sur la base de l'ECL, dans lequel un plus grand ECL entraîne une plus grande quantité de répétitions du préambule d'accès aléatoire correspondant à l'ECL ;
dans lequel lors du réglage d'une connexion entre l'extrémité NB-IoT et la station de base via le NPRACH sur la base de la configuration avec l'ECL étant de 0, la quantité de répétitions du préambule d'accès aléatoire est de 2 ; ou
lors du réglage d'une connexion entre l'extrémité NB-IoT et la station de base via le NPRACH sur la base de la configuration avec l'ECL étant 1, la quantité de répétitions du préambule d'accès aléatoire est de 8 ; ou
lors du réglage d'une connexion entre l'extrémité NB-IoT et la station de base via le NPRACH sur la base de la configuration avec l'ECL étant de 2, la quantité de répétitions du préambule d'accès aléatoire est de 16.

13. Procédé de transmission de données pour une extrémité NB-IoT selon la revendication 1 ou 2, comprenant en outre de :
lorsque le NRSRP mesuré par l'extrémité NB-IoT est supérieur ou égal au premier NRSRP de seuil, envoyer, par l'extrémité NB-IoT, le préambule d'accès aléatoire à la station de base en utilisant une valeur minimale dans Pmax et (x-t_NRSRP) comme puissance d'émission ; et/ou
lorsque le NRSRP mesuré par l'extrémité NB-IoT est inférieur au premier NRSRP de seuil, envoyer, par l'extrémité NB-IoT, le préambule d'accès aléatoire à la station de base en utilisant Pmax comme puissance d'émission, Pmax représentant la puissance d'émission maximale puissance configurée par la station de base pour l'extrémité NB-IoT, x=TargetPower+DELTA PREAMBLE +(Preamble TC-1)*PR Step+ NRS power r13-Gain, où TargetPower représente la puissance cible configurée par la station de base pour l'extrémité NB-IoT, DELTA PREAMBLE représente un décalage de puissance du préambule d'accès aléatoire, Préamble TC représente une quantité de temps d'accès de l'extrémité NB-IoT, PR _Step représente un pas d'incrément de puissance, NRS_power_r13 représente la puissance du signal de référence de la station de base, Gain représente un gain correspondant à un quantité de répétitions du préambule d'accès aléatoire, et t NRSRP représente le NRSRP mesuré par l'extrémité NB-IoT ; et Pmax est de 23 dBm.

14. Puce NB-IoT, comprenant :
une mémoire mémorisant des instructions de programme ; et
un processeur couplé à la mémoire et configuré pour appeler les instructions de programme mémorisées dans la mémoire et adapté pour exécuter le procédé de transmission de données pour une extrémité NB-IoT selon une quelconque des revendications 1 à 13.

15. Dispositif NB-IoT, comprenant une antenne et la puce NB-IoT selon la revendication 14, dans lequel l'antenne est connectée à la puce NB-IoT pour réaliser la transmission de données entre le dispositif NB-IoT et la station de base.
